# EUROPEAN PATENT APPLICATION

(11) **EP 1 333 643 A2**
(43) Date of publication of application: **06.08.2003**
(21) Application number: 03250699.0
(22) Date of filing: 04.02.2003
(51) Int. Cl.: H04L 29/06

(54) **Remote services system data delivery mechanism**

(30) Priority: 04.02.2002 US 66841
(71) Applicant: Sun Microsystems, Inc., Santa Clara, California 95054 (US)
(72) Inventor: Wookey, Michael J., Santa Clara, California 95054 (US); Watson, Trevor, Sheffield S17 3PR (GB); Chouanard, Jean, Redwood City, California 94062 (US)
(74) Representative: Meldrum, David James

(57) **Abstract**

The present invention relates to a data delivery mechanism which allows a remote services infrastructure back-channel to be independent of a network layer. More specifically, the data delivery mechanism allows back-channel communication without the need for network parameters. In the remote services infrastructure back-channel communication is based upon an internally allocated remote services ID where communication is always established in a forward direction.

## Description

### Cross Reference to Related Applications

This application relates to co-pending United States patent application Serial No. , attorney docket number P7223, filed on a even date herewith, entitled "Remote Services System Management Interface" and naming Michael J. Wookey, Trevor Watson and Jean Chouanard as inventors, the application being incorporated herein by reference in its entirety.

This application relates to co-pending United States patent application Serial No. , attorney docket number P7225, filed on a even date herewith, entitled "Remote Services Message System to Support Redundancy of Data Flow" and naming Michael J. Wookey, Trevor Watson and Jean Chouanard as inventors, the application being incorporated herein by reference in its entirety.

This application relates to co-pending United States patent application Serial No. , attorney docket number P7229, filed on a even date herewith, entitled "Remote Services Delivery Architecture" and naming Michael J. Wookey, Trevor Watson and Jean Chouanard as inventors, the application being incorporated herein by reference in its entirety.

This application relates to co-pending United States patent application Serial No. , attorney docket number P7230, filed on a even date herewith, entitled "Prioritization of Remote Services Messages Within a Low Bandwidth Environment" and naming Michael J. Wookey, Trevor Watson and Jean Chouanard as inventors, the application being incorporated herein by reference in its entirety.

This application relates to co-pending United States patent application Serial No. , attorney docket number P7231, filed on a even date herewith, entitled "Remote Services System Back-Channel Multicasting" and naming Michael J. Wookey, Trevor Watson and Jean Chouanard as inventors, the application being incorporated herein by reference in its entirety.

This application relates to co-pending United States patent application Serial No. , attorney docket number P7234, filed on a even date herewith, entitled "Remote Services WAN Connection Identity Anti-spoofing Control" and naming Michael J. Wookey, Trevor Watson and Jean Chouanard as inventors, the application being incorporated herein by reference in its entirety.

This application relates to co-pending United States patent application Serial No. , attorney docket number P7235, filed on a even date herewith, entitled "Automatic Communication Security Reconfiguration for Remote Services" and naming Michael J. Wookey, Trevor Watson and Jean Chouanard as inventors, the application being incorporated herein by reference in its entirety.

### Field of the Invention

The present invention relates to remote service delivery for computer networks, and more particularly to a data delivery mechanism for a remote service system.

### Background of the Invention

It is known to provide a variety of services that are delivered remotely to a customer. These services range from point solutions delivering specific service to more complex remote service instantiations supporting multiple services. The technology behind these services has a number of things in common: they are generally a good idea; they provide a valuable service to a set of customers; and, they are generally isolated from one another.

The number of remote services available show the need and demand for such services. However, the fragmentation of the services reduces the overall benefit to the service provider as well as to the customer. The customer is presented with an often confusing issue of which services to use, why the services are different and why the service provider cannot provide a single integrated service.

Communication often relies on low level network parameters like IP addresses or name. On a complex distributed system, managing these parameters to keep them up to date is time consuming and costly. Furthermore, in systems that are implemented using a public network or customer private network, the parameters can change in any form at any time without the remote service system knowledge.

### Summary

Viewed from one aspect the present invention relates to a data delivery mechanism which allows a remote services infrastructure back-channel to be independent of a network layer. More specifically, the data delivery mechanism allows back-channel communication without the need for network parameters. In the remote services infrastructure back-channel communication is based upon an internally allocated remote services ID where communication is always established in a forward direction.

One embodiment of the invention relates to communicating in a remote services system which includes: a unique remote services identifier, a forward channel communication path. A unique remote services identifier assigns a component within the remote services system. A forward channel is communicated using a forward channel communication path. A back-channel is communicated using a back-channel communication path. The destination of the back-channel communication is determined based upon the unique remote services identifier.

Another embodiment of the invention relates to a method of communicating in a remote services system which includes: a forward channel communication path and a back channel communication path. A forward channel is communicated using a forward channel communication path and a back-channel is communication using a back-channel communication path. The back-channel communication path is established only after a forward channel communication path is established.

Another embodiment of the invention relates to a method of communicating in a remote services system which includes: a unique remote services identifier, a forward channel communication path and a back-channel communication path. A component is assigned within the remote services system with a unique remote services identifier. A forward channel is communicated using a forward channel communication path and a back-channel is communication using a back-channel communication path. The back-channel communication path is established only after a forward channel communication path is established. A destination of the back-channel communication is based upon the unique remote services identifier of the component.

### Brief Description of the Drawings

Embodiments of the invention will now be described, by way of example only, and with reference to accompanying drawings so that the present invention may be understood, and its numerous objects, features, and advantages made apparent to those skilled in the art.
Figure 1 shows a block diagram of a remote service delivery architecture.
Figure 2 shows a schematic block diagram of the components relating to the remote services infrastructure.
Figure 3 shows a publish and subscribe example using the remote services delivery architecture.
Figure 4 shows a block diagram of the application program interfaces (API's) of the remote service delivery architecture.
Figures 5A and 5B show a more detailed version of the components of Figure 2.
Figure 6 shows a block diagram of a remote services proxy and a remote services system management integrator.
Figure 7 shows a block diagram of a remoter services intermediate mid level manager (MLM).
Figure 8 shows a block diagram of a remote services applications MLM.
Figure 9 shows a block diagram of an application server module.
Figure 10 shows a block diagram of a content generation MLM module.
Figure 11 shows a flow diagram of a remote services system communication.
Figure 12 shows a block diagram of the data blocks that comprise the data that flows through the remote services infrastructure.
Figures 13A and 13B show an example of the high level architecture component relationships of a remote services system that is configured according to the remote services architecture.
Figure 14 shows a flow chart of the different tasks associated with the sender of a message.
Figure 15 shows a flow chart of the different tasks associated with a component forwarding a message.
Figures 16A and 16B show a flow chart of an overview of the data flow of the intermediate receiver of a message.
Figure 17 shows a flow chart of the data flow of receiving a message.
Figure 18 shows the data flow for the back-channel sending process.
Figures 19A and 19B show a flow chart of controlling message address expansion for groups.
Figure 20 shows a flow chart of the authorization process of a bulk data transfer from a customer.
Figure 21 shows a flow chart of the data flow of a bulk data transfer from a proxy.
Figure 22 shows a flow chart of the authorization process of a bulk data transfer from the remote services system.
Figures 23A and 23B show a flow chart of the data flow of the bulk data transfer from the remote services system.

### Detailed Description

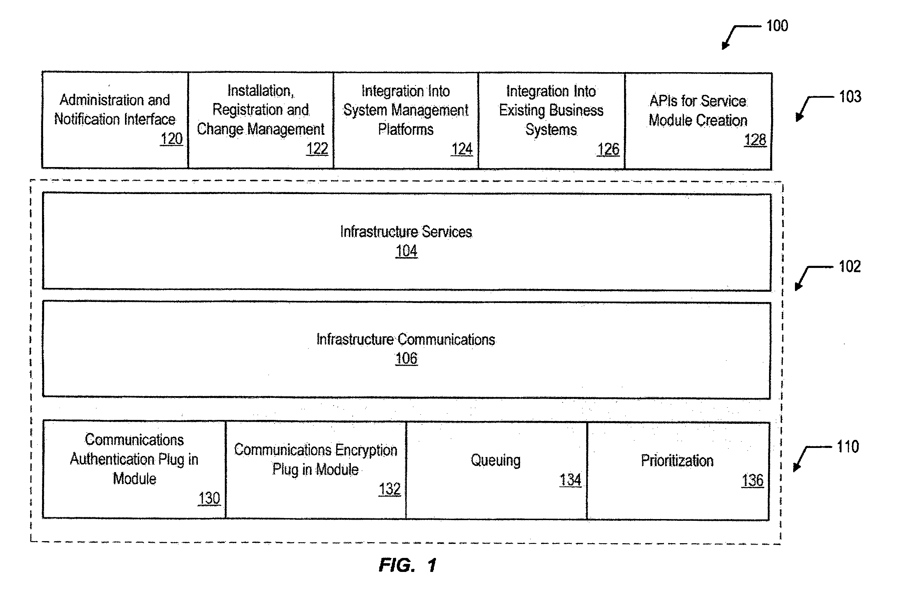

Figure 1 shows a block diagram of an architecture for a remote service delivery system 100 that meets the needs of both the service provider and the customer. The architecture of the present invention is modularized to provide broad support for both the customer and the service provider in terms of evolution of service functionality to the architecture and within the architecture.

The architecture is broadly comprised of the remote service infrastructure 102, a group of service modules 103 and a plurality of communications modules 110. The remote services infrastructure 102 provides reliable remote service delivery and data management. The remote services infrastructure 102 supports the needs of a service creator by focusing the service creator on the needs and the design of the service by eliminating the need for the service creator to be concerned about how data is transferred and managed to and from a customer site.

The remote services infrastructure 102 provides an interface to support the development of services that use a set of common service parameters to develop customized services for a specific service provider or customer. The infrastructure 102 is separately segmented from, but actively interacts with, the service modules 103.

Within the group of software modules 103 are individual software modules that analyze data collected by the remote services infrastructure 102 and provides service value based on that data to a customer. Thus, the remote services infrastructure 102 and the service modules 103 can be differentiated as follows: the remote services infrastructure 102 is concerned with how data is collected, while the service module 103 is concerned with what is done with the data.

The remote services infrastructure 102 includes an infrastructure services portion 104 and an infrastructure communications portion 106. The infrastructure services portion 104 interacts with the plurality of service modules 103, as described in greater detail below. The remote services infrastructure 102 provides a set of application program interfaces (API's) that are used by a service module developer to leverage common services of the infrastructure such as database access, software delivery and notification services. The infrastructure communications portion 106 includes a plurality of communications modules 110.

The infrastructure services portion 104 interacts with a plurality of service modules 103. Examples of service modules that the remote services architecture may include are an administration and notification interface module 120, an installation, registration and change management module 122, an integration into system management platforms module 124, an integration into existing business systems module 126 and an API's for service module creation module 128. The administration and notification interface 120 allows a customer and service provider to control the remote services infrastructure. The installation, registration and change management module 122 supports the infrastructure and service modules deployed on top of the infrastructure. The module 122 may include automatic registration of new software components, delivery of software and detection of changes within an environment. The integration into systems management platforms module 124 provides an integration point to systems management platforms in general. The integration into existing business systems module 126 allows the remote services infrastructure 102 to integrate into existing business systems to leverage data, processing capacities, knowledge and operational process. The module 126 allows the infrastructure 102 to integrate into the required business systems and provides interfaces to the service module creator to use those systems. The API's for service module creation module 128 allows a service module creator to abstract the complexity of remote data management. The module 128 provides an API of abstracted services to the service module creator.

The infrastructure communications portion 106 provides an abstraction of different protocol and physical network options. Examples of protocol options include an HTTP protocol and an email protocol. Examples of physical network options include Internet based communications, private network based communications and fax communications. The different protocol and physical network options are provided to meet the needs of as many customers as possible.

The infrastructure communications portion 106 supports a number of plug-in communications modules 110. Examples of the communications modules 110 include a communications authentication module 130, an encryption module 132, a queuing module 134, and a prioritization module 136. The communications authentication module 130 is related to the communications protocol that is used and provides the customer with authentication of a communication session. The encryption module 132 is related to the protocol being used and provides encryption of the data stream. The queuing module 134 provides the ability of the infrastructure to queue data being sent through the infrastructure to provide data communications integrity. The prioritization module 136 provides the ability for data within the system to be prioritized for delivery.

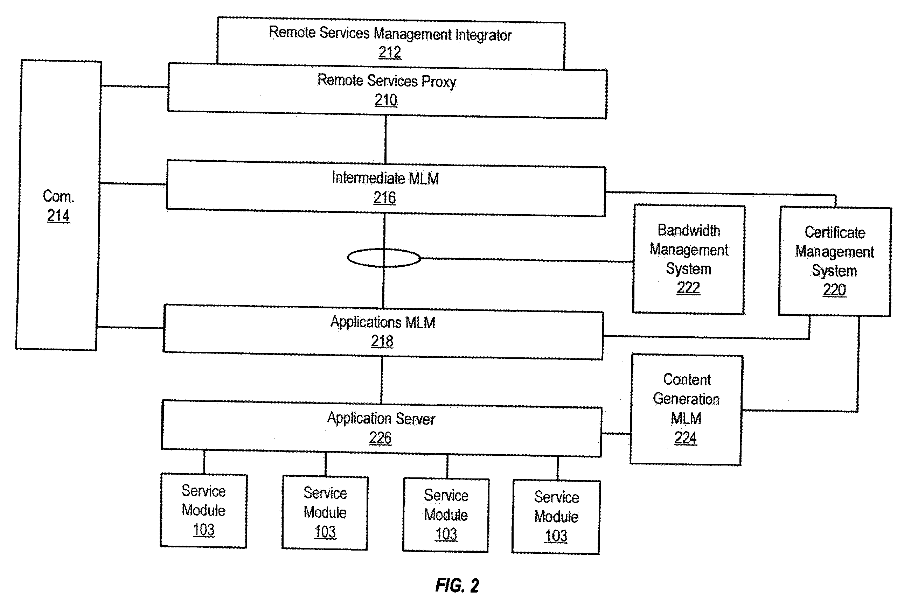

Referring to Figure 2, the remote services infrastructure architecture 205 includes a plurality of components. More specifically, the remote services infrastructure architecture 205 includes a remote services proxy 210, a remote services system management integrator 212, a remote services communications module 214, an intermediate mid level manager (MLM) 216 (which may be a customer MLM or an aggregation MLM), an applications MLM 218, a certificate management system 220, a bandwidth management system 222, a remote services content generation MLM 224, a remote services application server 226. The remote services infrastructure architecture 205 interacts with a plurality of external service modules 103.

The remote services proxy 210 provides an API to the systems management systems. This API supports data normalization to the remote services data format. The remote services proxy 210 also provides receptors for the communications modules and in turn provides communications flow management using queuing. The remote services proxy 210 also manages allocation of remote services identifiers (ID's), which are allocated to each component of the remote services infrastructure, and the support instances that are registered with the remote services system 100.

The remote services system management integrators 212 are written to a remote services integrator API supported by the remote services proxy 210. One remote services proxy 210 can support many integrators (also referred to as integration modules). The integration modules provide the glue between the remote services system 100 and the systems management platform. There is at least one integration module for each support systems management platform.

The remote services communications modules 214 provide protocol, encryption and communications authentication. These modules plug-in through a semi-private interface into the remote services proxy 210, the intermediate MLM 216 and the remote services application MLM 218.

The intermediate MLM 216 may be either a customer MLM or an aggregation MLM. The remote services customer MLM is an optional deployable component. The remote services customer MLM provides a higher level of assurance to the customer-deployed environment, providing transaction integrity, redundancy and data queue management. The remote services customer MLM also provides an extensible environment through an API where service module components can be deployed. When no customer MLM is deployed, the aggregation MLM, hosted by the remote services provider and handling multiple customers, provides the data queue management, transaction integrity and redundancy. While the customer MLM is very similar to an aggregation MLM, a customer MLM may be required by a service module that needs to be localized. An aggregation MLM, being shared by multiple customers, may not be customizable.

The applications MLM 218 provides a series of functions that can exist on different MLM instantiations as applicable. The applications module provides data normalization, integration with the mail server data flow and integration with the certificate management system 220. This module acts as the gateway to the remote services application server 226 and controls data access.

The certificate management system 220 provides management of certificates to verify connection authentication for the remote services system 100. The certificate management system 220 may be horizontally scaled as necessary to meet the load or performance needs of the remote services system 100.

The bandwidth management system 222 provides control over bandwidth usage and data prioritization. The bandwidth management system 222 may be horizontally scaled as necessary to meet the load or performance needs of the remote services system 100.

The remote services content generation MLM 224 provides HTML content based on the data held within the remote services application server 226. This module provides a high level of HTML caching to reduce the hit rate on the application server for data. Accordingly, visualization of the data is done through the content generation MLM 224. Separating the visualization processing in the content generation MLM 224 from the data processing in the applications server 226 provides two separate scale points.

The remote services application server 226 provides the persistent storage of remote services infrastructure information. The application server 226 also provides the data processing logic on the remote services infrastructure information as well as support for the service module API to create service module processing within the application server 226. The application server 226 provides access to directory services which support among other things, IP name lookup for private network IP management. The application server 226 also provides access to the service modules 103.

In operation, the remote services proxy 210 uses the communication module 214 to connect to the intermediate MLM 216, whether the intermediate MLM is a customer MLM or an aggregation MLM. The applications MLM 218 and the intermediate MLM 216 use the certificate management system 220 to validate connections from customers. Dataflow bandwidth between the intermediate MLM 216 and the applications MLM 218 is controlled by the bandwidth management system 222. Data that has been formatted by the applications MLM 218 is sent on to the application server 226 for processing and persistent storage.

The content generation MLM 224 provides visualization and content creation for users of the remote services system 100. Remote services infrastructure administration portal logic is deployed to the content generation MLM 224 to provide users of the remote services system 100 with the ability to manage the remote services system 100.

All of the remote services components are identified by a unique remote services identifier (ID). A unique customer remote services ID is generated at customer registration. For remote services infrastructure components, remote services IDs are generated, based on the customer remote services ID, at a component registration phase. For remote services entities reporting to a remote services proxy 210, such as a support instance or an integration module, the remote services ID is allocated by the proxy 210 itself, based on the remote services ID of the proxy 210.

Within the remote services architecture, there are instances where detection, collection and management logic (also referred to as systems management logic) may have already been created by another service module. In this instance, the service module creator reuses this functionality. The reuse then creates a more complex relationship within the system to be managed. The segmentation and re-use of data is available within the architecture. Instrumentation is made up of a large number of small data types. These data types are shared by the different service modules 103 using a publish and subscribe model.

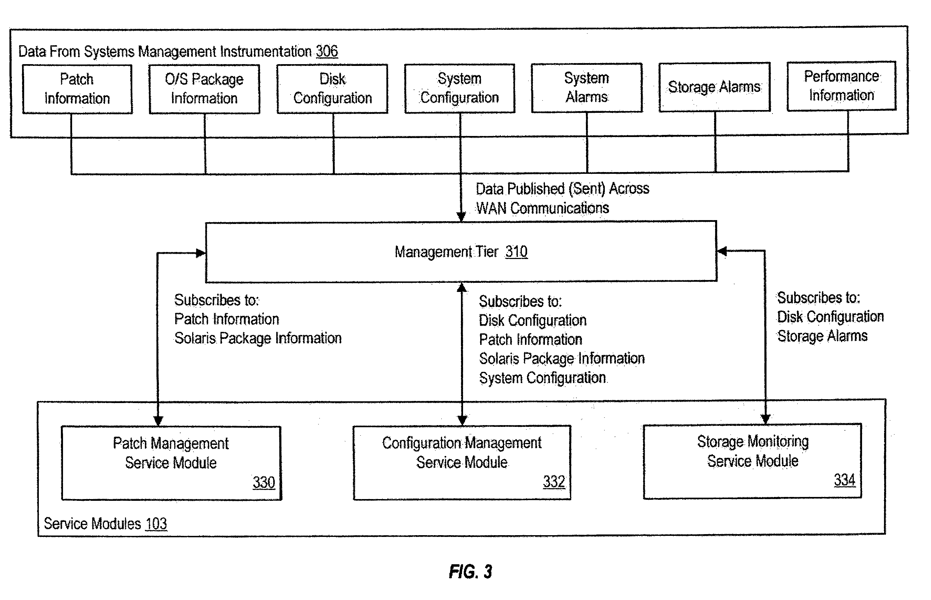

In a publish and subscribe model, the remote services proxies (and therefore the systems management systems) publish their data to a service provider. The service modules 103 register interest in specific types of data that are needed to fulfill the respective service module processing. Figure 3 provides an example of the publish and subscribe model using example data and services.

More specifically, data from a systems management instrumentation proxy 306 may include patch information, operating system package information, disk configuration information, system configuration information, system alarms information, storage alarms information and performance information. This information is published via, e.g., a wide area network (WAN) to a management tier 310. Various service modules 103 then subscribe to the information in which they are respectively interested. For example, a patch management service module 330 might be interested in, and thus subscribe to, patch information and operating system package information. A configuration management service module 332 might be interested in, and thus subscribe to, the disk configuration information, the patch information, the operating system package information and the system configuration information. A storage monitoring service module 334 might be interested in, and thus subscribe to, disk configuration information and storage alarms information.

Thus, with a publish and subscribe model, many different types of data are published by a customer using the remote services customer deployed infrastructure. Service modules then subscribe to these data types. More than one service module 103 can subscribe to the same data. By constructing the instrumentation data in a well segmented manner, the data can be shared across many services.

Sharing data across many services reduces duplication of instrumentation. By making data available to newly developed service modules, those service modules need to only identify instrumentation that does not exist and reuse and potentially improve existing instrumentation. Sharing data across multiple services also reduces load on customer systems. Removing the duplication reduces the processing load on the customer's systems. Sharing data across multiple services also reduces development time of service modules 103. As more instrumentation is created and refined, service modules 103 reuse the data collected and may focus on developing intelligent knowledge based analysis systems to make use of the data.

Accordingly, the separation and segmentation of the infrastructure from the service modules enables services to be created in a standardized manner ultimately providing greater value to the customer.

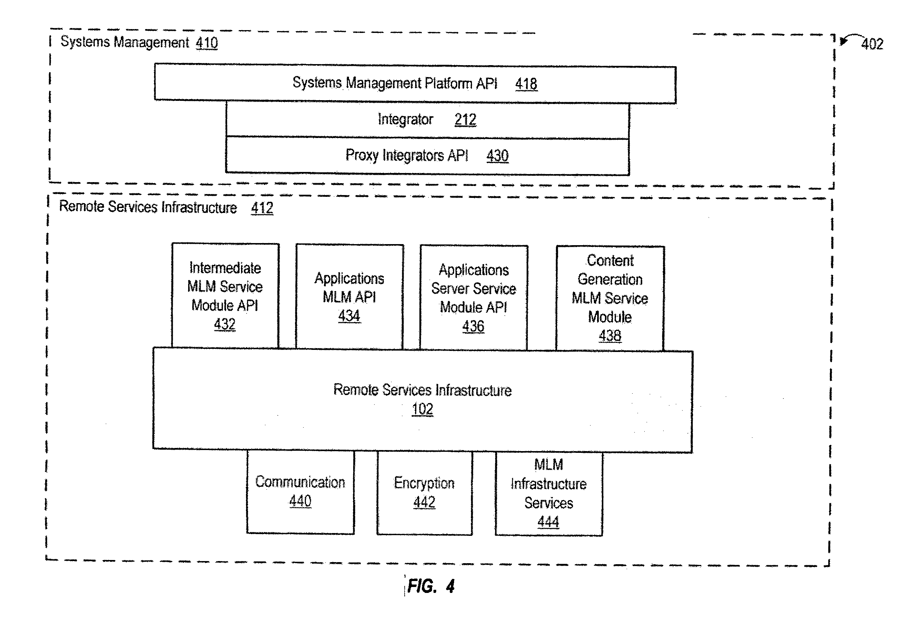

Referring to Figure 4, the remote services architecture includes a remote services API 402 which may be conceptualized in two areas, systems management API's 410 and remote services infrastructure API's 412.

The systems management API's 410 includes systems management API's 418, integrator 212 and proxy integrators API 430. The proxy integrator API 430 interfaces with integrator module service logic. The integrator module service logic is a general term for the configuration rules that are imparted on the systems management system to collect or detect the information for the integrator 212. While the proxy integrator API's 430 are not technically a part of the remote services system 100, the proxy integrator API 430 is used within the integration modules which form the boundary between the remote services system 100 and the system management. The integration module creator provides the instrumentation to fulfill the collection and detection needs of the service via the systems management API 418.

The proxy integrators API 430 provides an interface between the systems management system and the remote services infrastructure 102. This interface provides a normalization point where data is normalized from the system management representation to a remote services standard. By normalizing the data, the remote services system 100 may manage similar data from different systems management systems in the same way. The proxy integrators API 430 interfaces with the remote services proxy 210 as well as the systems management integrator 212.

The remote services infrastructure API's are used by a service module creator and the systems management integrator 212. The remote services infrastructure API's 412 include an intermediate MLM Service Module API 432, an applications MLM API 434 and an applications server service module API 436 as well as a content generation MLM service module API 438. These API's provide the interface with the remote services infrastructure 102.

The intermediate MLM Service Module API 432 describes a distributed component of the infrastructure. The intermediate MLM service module API 432 allows modules to be loaded into this distributed component that provides mid data stream services such as data aggregation, filtering, etc. The intermediate MLM service module API 432 provides access and control over the data that flows through the intermediate MLM 216 to the service module provider. The intermediate MLM service module API 432 allows intercept of data upstream and on the back-channel to mutation, action and potential blocking by the service modules 103. The intermediate MLM service module API 432 interfaces with a service module creator as well as with the intermediate MLM 216 and intermediate MLM based service modules.

The applications MLM API 434 allows additional modules to be loaded on the applications MLMs. The applications MLM API 424 allows modules to be built into the applications MLMs 218 such as data normalization. The applications MLM API 424 interfaces with the applications MLMs 218 and modules within the applications MLM 218.

The applications server service module API 436 provides all of the needs of a data processing service module. The applications server service module API 436 provides access to many functions including data collected through a database and access to a full authorization schema. In an example the applications service module API 436 is based around the J2EE API. The applications service module API 436 provides a rich interface for service module creators to interact with and build services based on Enterprise Java Beans (EJB's) and data available to them. The application server service module API 436 interfaces with the remote services application server 226 and the service modules 103.

In an example the content generation MLM API 438 is based around the J2EE web container and provides the service module creator a way of building a browser based presentation. The content generation API 428 interfaces with the content generation MLM 224 as well as with MLM generation based service modules.

The remote services infrastructure API's 412 also include a plurality of communication interfaces which are based around the extendibility of the remote services communications system. The communication interfaces include a communication protocol module 440, a communication encryption module 442 and an MLM infrastructure services portion 444. The communications interfaces interface with the remote services proxy 210 as well as all of the remote services system MLM's. The communications interfaces provide an interface between the communications modules and the components that use the communications modules.

The communications protocol module 440 provides support of the application level protocol that is used for the communication through the system. Modules of this type interface to support the use of Email and HTTP communications protocols. The communication protocol module 440 interfaces with remote services communications engineering personnel.

The communications encryption module 442 supports plug-in encryption modules. The plug-in encryption modules can either provide encryption at the protocol level or encryption of the data within the protocol. The communication encryption module 442 interfaces with remote services communications engineering personnel.

The MLM infrastructure services portion 444 represent a number of services that are included within the MLM that provide services that are relevant to the infrastructure 102. These services manage and manipulate the data as it passes through the different parts of the architecture. These services, such as queuing, utilize an API to access and manipulate the API.

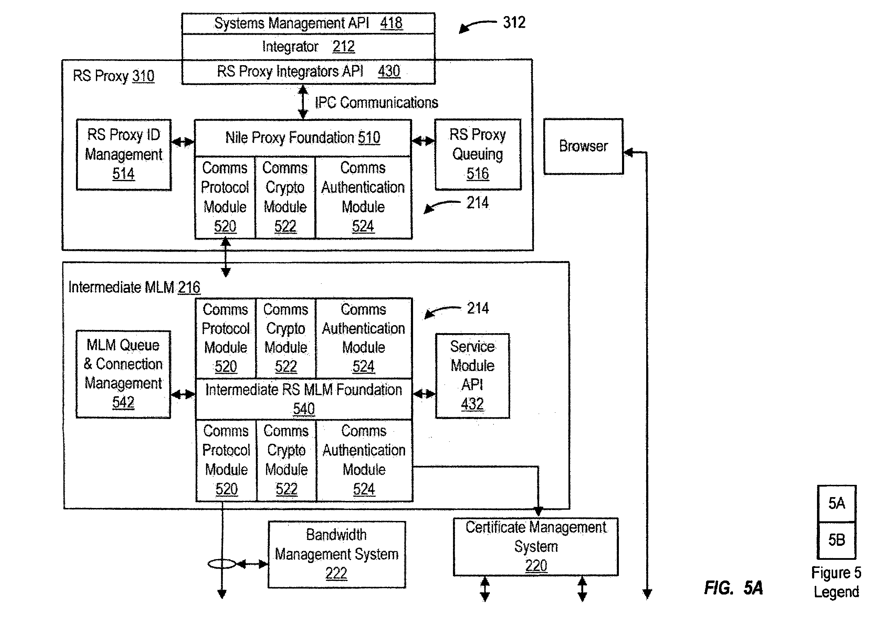

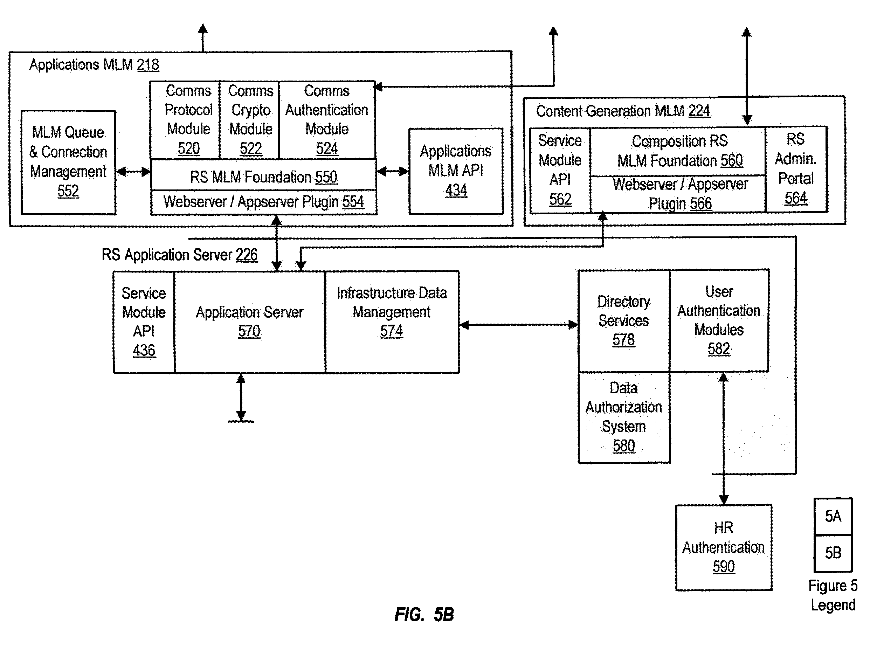

Figures 5A and 5B show a more detailed block diagram of the remote services architecture depicted in Figure 2. Within this more detailed block diagram, the remote services communications modules 214 are shown distributed across the remote services proxy 210, the intermediate MLM 214 and the applications MLM 218.

The remote services proxy 210 includes a remote services proxy foundation module 510 which is coupled to a communications module 214 as well as to a remote services proxy integrator API module 430, a remote services proxy ID management module 514 and a remote services proxy queuing module 516.

The remote services system management integrator 212 includes a systems management API 418 and a remote services integrator 212. The remote services integrator 212 is coupled to the remote services proxy integrators API module 430 of the remote services proxy 210.

Each communication module 214 includes a communications protocol module 520 and a communications crypto module 522. A communications module 214 may also include a communications authentication module 524.

The intermediate MLM 216 includes an intermediate remote services MLM foundation module 540 which is coupled between communication modules 214. The intermediate remote services MLM foundation module 540 is also coupled to a MLM queue and connection management module 542 and an intermediate service module API module 432. Communications modules 214 couple the intermediate MLM 216 to the remote services proxy 210 and the applications MLM 218.

Bandwidth management system 222 controls bandwidth usage and data prioritization on the communications between intermediate MLM 216 and applications MLM 218. Certificate management system 220 is coupled between the communications authentication modules 524 for the intermediate MLM communications module 214 and the applications MLM 218 communications module 214.

The applications MLM 218 includes a remote services MLM foundation module 550 that is coupled to the communications module 214 for the applications MLM 218. The remote services MLM foundation module 550 is also coupled to an MLM queue and connection management module 552 and the applications MLM API module 434 as well as a web server application server plug-in module 554.

Content generation MLM 224 includes a composition MLM foundation module 560. The composition MLM foundation module 560 is coupled to a service content generation module API module 438 and a remote services administration portal 564 as well as a web server application server plug-in module 566.

Remote services application server 226 includes an application server module 570 coupled to an application server service module API 436 and an infrastructure data management module 574. The application server module 570 is also coupled to relational database management system (RDBMS) 576. The infrastructure data management module 574 is coupled to a directory services module 578. The directory services module 578 is coupled to a data authorization system module 580 and user authentication modules 582. The user authentication modules 582 are coupled to human resources (HR) authentication module 590. The remote services application server 226 is coupled to a plurality of external service modules 230.

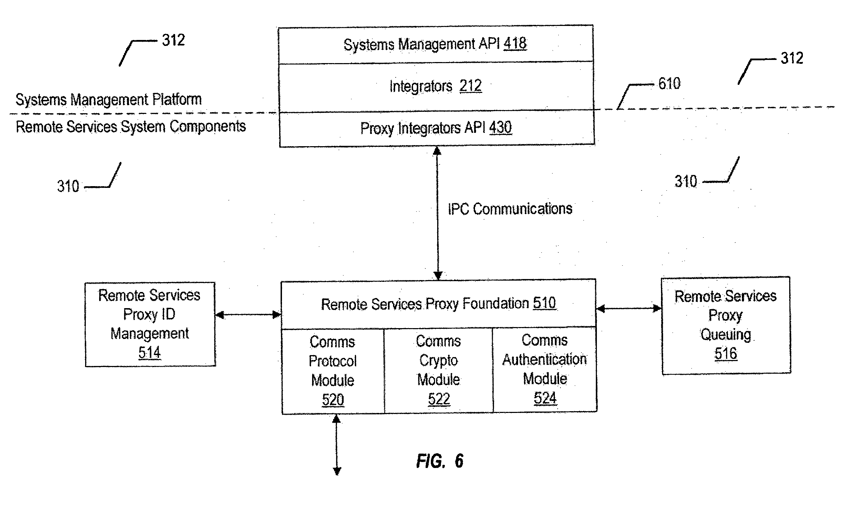

Figures 6, 7, 8, 9 and 10 show expanded views of the remote services proxy 210 and remote services system management integrator 212, intermediate MLM 216, applications MLM 218, applications server 226 and content generation MLM 224, respectively.

Figure 6 shows a block diagram of the remote services proxy 210 and the remote services system management integrator 212. The block diagram shows the delineation between the systems management software and the remote services system components as indicated by line 610.

The remote services proxy 210 provides an API via remote services proxy integrators API 430 which communicates using the operating system's Inter-Process Communication (IPC) implementation with the remote services proxy foundation module 510. This communication allows the API to be implemented with a number of different languages to meet the needs of the systems management developers while leaving a single native implementation of the remote services proxy foundation module 510. Examples of the languages used for the API include Java and C++.

The remote services proxy foundation module 510, together with the API 430, manage data normalization tasks. This ensures that systems management data is carried independently through the system. For example, an event from one type of service, such as a SunMC service, would have the same structure as an event from another type of service, such as the RASAgent service. Accordingly, the service modules may deal with the data types that are specific to the respective service and are independent of their source.

In the remote services architecture, the integrator 212 and proxy 210 are represented by two separate processes (e.g., address spaces). By representing the integrator 212 and the proxy 210 as two separate processes, a faulty integrator 212 is prevented from taking down the whole proxy 210.

The remote services proxy queuing module 516 allows data to be queued for transmission when communications to the intermediate MLM(s) 216 become unavailable. This queuing is lightweight and efficient which in turn reduces the capabilities of length of time data can be queued and of reconnection management. The remote services proxy queuing module 516 provides a number of features that can be used to manage the queue, such as priority and time for data to live.

The remote services proxy ID management module 514 manages the allocation of unique identifiers for the proxy 210 itself and any support instances that are registered through the API. The remote services system 100 relies on the creation of unique ID's to manage individual support instances. This function is provided within the proxy 210 because there is no unique cross platform identifier available within the remote services system 100. The proxy 210 manages the mapping between the systems management ID (e.g., IP address) and the remote services ID, which is keyed off the unique customer ID provided at installation time within the deployed system.

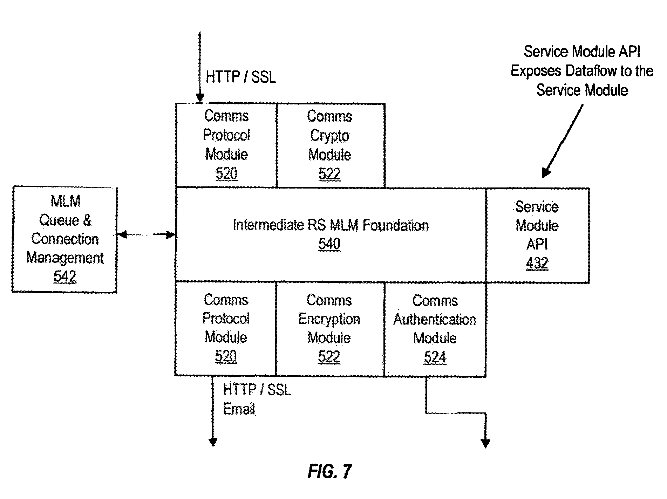

Figure 7 shows a block diagram of the remote services intermediate MLM 216. The intermediate MLM may be a customer MLM or an aggregation MLM.

The customer MLM is an optional component that can be deployed to support scaling of both support instances and services as well as provide enhanced availability features for a deployed remote services environment. The intermediate MLM 216 receives information via the HTTP protocol from the remote services proxy 210. This information may optionally be encrypted. Connections are not authenticated by default on the server side, as it is assumed that the connection between the intermediate MLM 216 and the proxy 210 is secure.

The intermediate remote services MLM foundation module 540 exposes the data flow to the service module API 432 where registered service modules can listen for new data of specific types and mutate the data as required. Examples of this function include filtering of certain types of data or data aggregation. The customer MLM does not keep state from an infrastructure perspective. However, the service module could choose to keep persistent state information. The recoverability fail-over support of that state, however, is in the domain of the service module, although the basic session replication features that provide the redundancy features of the infrastructure data flow may be reused.

The queue and connection management module 542 provides a highly reliable secure connection across the wide area network to the service provider based MLM farms. The queue manager portion of module 542 also manages back-channel data that may be intended for specific remote services proxies as well as for the applications MLM 218 itself.

The intermediate remote services MLM foundation module 540 manages the rest of the MLM's roles such as session management, fail-over management and shared queuing for the back-channel.

Aggregation MLM's, while provided by the service provider, function much the same as customer MLM's. Strong security is turned on by default between such MLM's and the remote services proxy 210. Accordingly, a communications authentication module 524 is used on the receiving portion of the intermediate MLM 216.

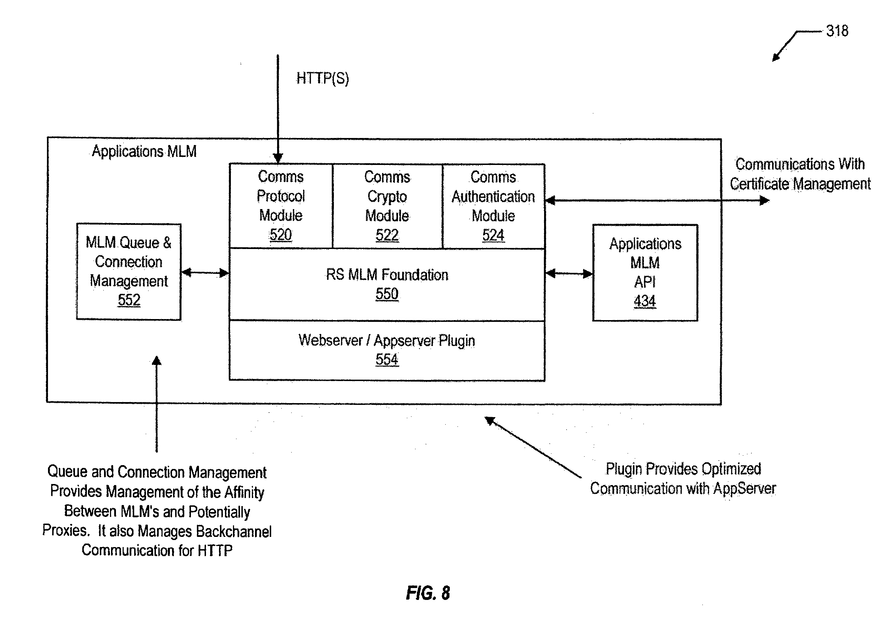

Referring to Figure 8, the remote services application MLM 218 provides several functions (applications) for the remote services system 100. The remote services application 218 hosts applications as well as functioning as a content creation MLM. The host applications within the application MLM 218 include data normalization, customer queue management and remote access proxy. The data normalization application supports normalization and formatting of data being sent to the application server 226. The customer queue management application handles general connections to and from customer remote services deployments. The customer queue management application also manages back-channel requests and incoming request. The remote access proxy application provides a remote access point as well as functioning as a shared shell rendezvous point. The applications MLM 218 uses the application server plug-in to communicate directly with the application server 226.

The communications authentication module 554 communicates with the certification management system 220 to validate incoming connections from customers. Each customer is provided a certificate by default although more granular allocations are available. Certificates are distributed at installation time as part of the installation package for both the remoter services proxy module and for the remoter services customer MLM.

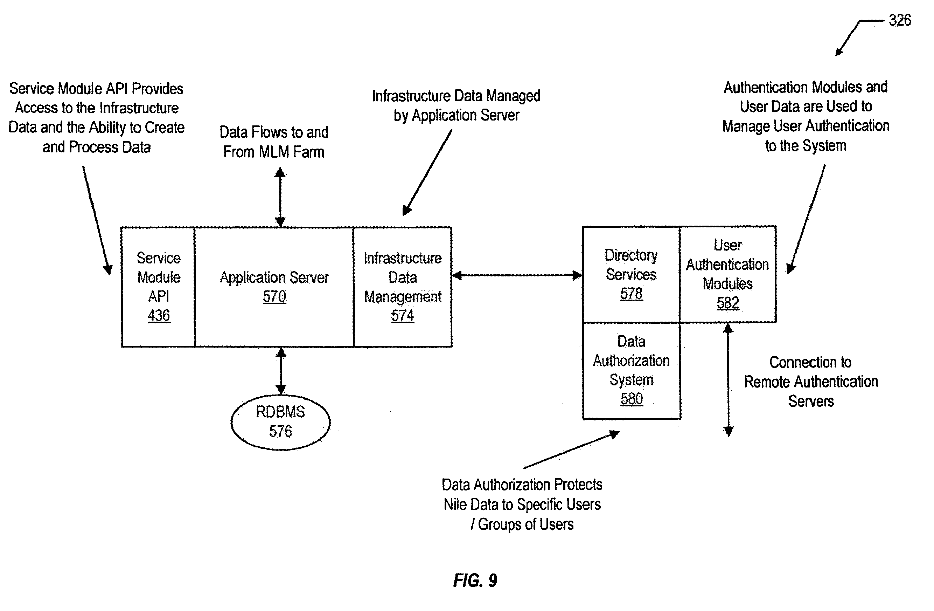

Referring to Figure 9, the application server 226 manages the persistence and data processing of the remote services infrastructure 102 and the service modules 103.

The application server 226 provides the core service module API 436 to the service module creator. In an example the service module API 436 is based upon the J2EE API. The service module API 436 allows the service module creator to register for certain types of data as the data arrives and is instantiated. This data can then be processed using the support of the application server 226 or alternatively exported from the remote services system 100 for external processing.

The infrastructure data is held within the application server 226 and stored within the RDBMS 576 associated with the application server 226. Access to this data is available via the service module API 436 and is managed via the infrastructure data management module 574.

The directory services implementation supports user authentication, data authorization and private network data support. User authentication uses a pluggable authentication module (PAM) so support a plurality of authentication methods such as a lightweight directory assistance protocol (LDAP) method for service provider employees and a local login method for a remote services based login schema. Other methods may be added. The LDAP login is processed using a replicated copy of an LDAP server running within the remote services infrastructure 102.

Data authorization is designed to protect the data held within the application server 226 to specific groups of users. This protection allows customers to grant or deny access to their service data to specific users. This data protection is managed down to the service module granularity. So for example, a customer could grant information about advanced monitoring on a subset of their support instances to members of a service provider monitoring staff.

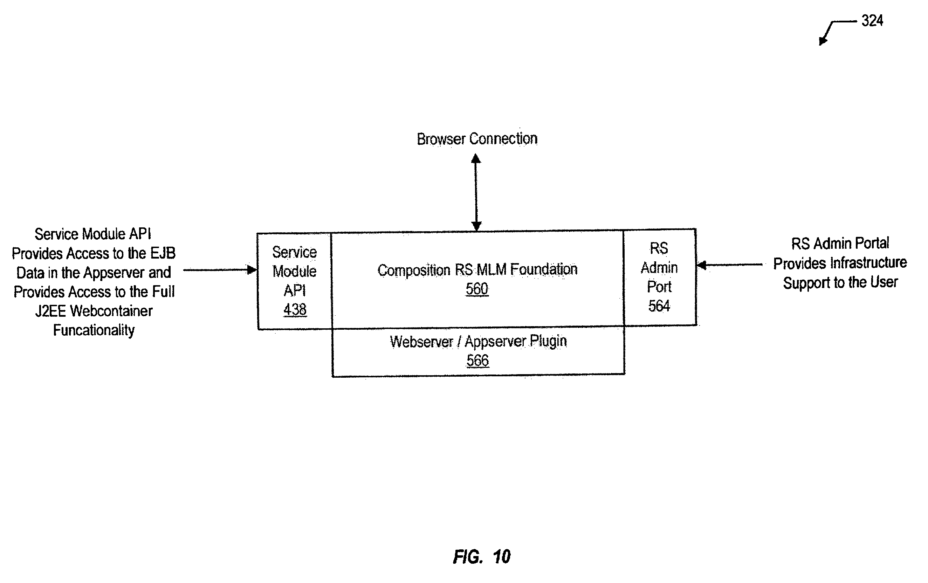

Referring to Figure 10, the remote services content generation MLM 224 provides HTML generation bases on the data held within the application server 226. The content generation MLM 224 provides a service module API 438 for service module creators to develop content composition for their data which is processed by the application server 226. In an example the content is in the form of J2EE web container which supports Java servlets and Java servlet pages (JSP) API's.

In an example the content generation MLM 224 communicates with the application server 226 using the same Netscape API (NSAPI) plug-in as the remote services applications MLM 218. Instances of these two MLMs make up an MLM farm. The composition remote services foundation layer provides support for caching of HTML pages and associated data to reduce the data request hit back to the application server 226.

The remote services administration portal 564 provides control of the deployed customer infrastructure to the customer and control over the total infrastructure to trusted users.

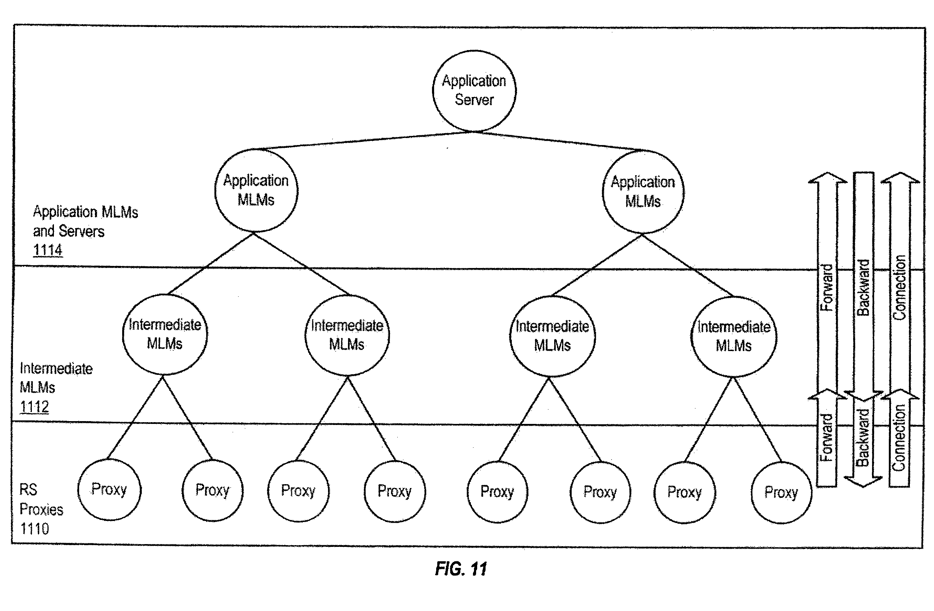

Figure 11 shows a flow diagram of communications within a remote services architecture. In one embodiment, the communications between a customer and a service provider is via a wide area network (WAN). Communications within the remote service architecture includes three tiers, a remote services proxy tier 1110, an intermediate MLM tier 1112 and an application MLM and server tier 1114. Communication is established and connections are made from the bottom tier (the remote services proxy tier) to the top tier.

The remote services architecture supports two application protocols for the majority of its services classification support: HTTP and Email messaging. There are a plurality of service module classifications that each have specific communications protocol relationships. More specifically, the service module classifications include a data collection classification, a monitoring classification, a remote access classification and an infrastructure administration classification.

With the data collection classification, the connection orientation is message based, the physical connection support may be Internet, private network or fax, and the protocols supported may be Email or HTTP. Examples of service modules of this classification include an inventory management service module and a performance management service module.

With the monitoring classification, the connection orientation is message based, the physical connection support may be Internet, private network or fax, and the protocols supported may be Email or HTTP. Examples of service modules of this classification include basic self service monitoring and full hardware monitoring with service action.

With the remote access classification, the connection orientation is session based, the physical connection support may be Internet, private network or fax, and the protocol supported is HTTP. The session based connection orientation is one way initiation from the customer. Examples of service modules of this classification include remote dial in analysis and remote core file analysis.

With the infrastructure administration classification, the connection orientation is session based or off-line installation, the physical connection support may be Internet, private network or fax, and the protocol supported includes HTTP, email or physical (e.g., telephone or CD). The session based connection orientation is one way initiation from the customer and the off-line installation is via, e.g., a CD. Examples of service modules of this classification include remote services administration, installation, updates, configuration and notification.

Encryption options are related to the protocol. A secure socket layer (SSL) protocol, for example, is likely to be the chosen protocol for an HTTP transmission, i.e., an HTTPS transmission. The remote services communication architecture does not enforce this however. So, for example, data could be sent by encrypting the body of an HTTP stream. This provides an advantage when a customer's HTTPS proxy infrastructure is not as resilient as their HTTP proxy infrastructure.

Email uses an email encryption option such as s-mime or encrypting the body using a third party encryption method such as PGP. Encryption is optional at all stages. If the customer does not require encryption, then encryption need not be used.

Authentication of the remote services communication is standard for all protocols. Accordingly, the service provider may validate the sender of data and the customer may validate that the service provider is the receiver. Authentication is managed via certificates.

Certificates are used in both the client and server to authenticate a communications session. Client certificates are generated during the customer registration process and are built into the remote services proxy and the customer MLM. By default, each customer is provided a client certificate. The customer can, however, define specific security groups within their service domain and request additional client certificates for those domains. Remote services processes include a certificate distribution mechanism, supporting either the creation of a new security group within an existing customer or the redeployment of a new certificate after a certificate is compromised.

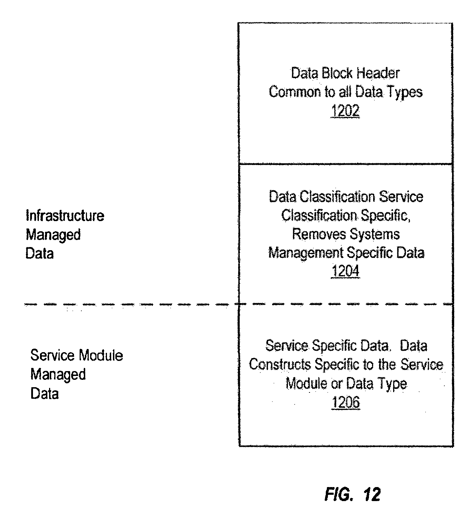

Figure 12 shows a block diagram of the data blocks that comprise the data that flows through the remote services infrastructure. Each system management system conforms to the data definitions that are part of the remote services proxy integrators API 430. The remote services communications architecture provides a normalized view of the data, regardless of in which systems management framework the data originated.

Data block header 1202 is common to all data types. Data block header 1202 contains items such as source, routing information, time to transmit and source type. Data block header 1202 is used to route the data correctly through the remote services system 100 to the correct service module 103. Data block header 1202 is used to provide diagnostic and quality of service measurement built into the system.

Infrastructure data block 1204 provides data classification service classification specific data. Infrastructure data block 1204 removes systems management specific data.

Service module data block 1206 provides format based on each service classification that drives the system the systems management normalization of the data that flows through the system. For example, alarm data includes general characteristics defined such as severity, state and originating support instance.

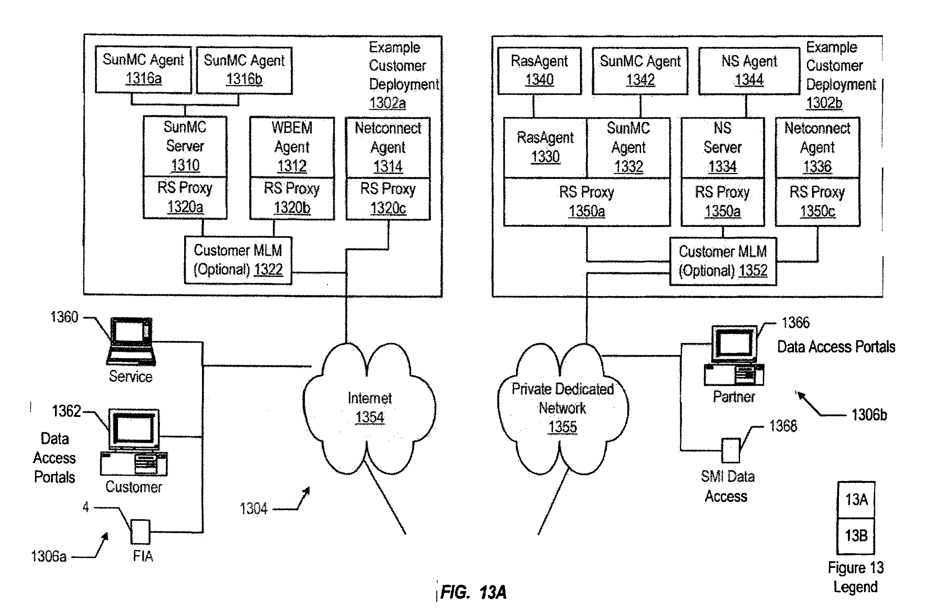

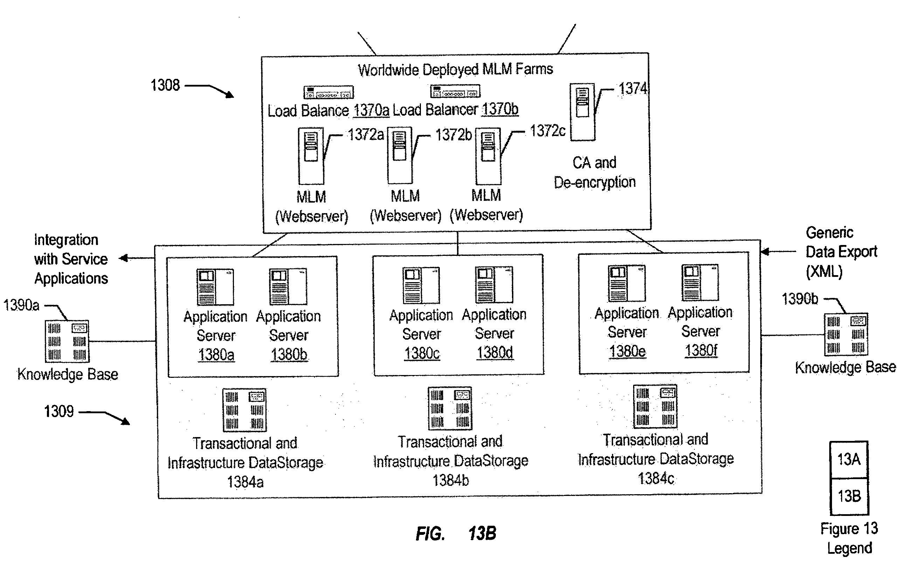

Figures 13A and 13B show an example of the component relationships of a remote services system 100 that is configured according to the remote services architecture. Various components of the remote services system 100 execute modules of the remote services infrastructure architecture 205. Remote services system 100 includes customer deployment portion 1302a, 1302b, network portion 1304, data access portal 1306a, 1306b, Mid Level Manager (MLM) portion 1308, and application server portion 309.

Customer deployment portion 1302a sets forth an example customer deployment. More specifically, customer deployment portion 1302a includes SunMC server 1310, WBEM agent 1312, and Netconnect Agent 1314. SunMC agents 1316a, 1316b are coupled to SunMC server 1310. Server 1310, Agent 1312 and Agent 1314 are each coupled to a respective remote services proxy 1320a, 1320b, 1320c. Remote services proxies 1320a, 1320b, 1320c are coupled to network portion 1304, either directly, as shown with proxy 1320c, or via customer MLM 1322, as shown with proxies 1320a and 1320b. Proxies 1320a and 1320b may also be directly coupled to network portion 304 without the MLM 1322 present. The SunMC server is a provider specific systems management server (i.e., health management server). The SunMC agents are provider specific systems management agents (i.e., health management agents). The WEBM agent is a web based enterprise management agent. The Netconnect agent is a basic collection agent. Customer deployment portion 1302a illustrates that the systems management may be 2-tier (e.g., agent, console) or 3-tier (e.g., agent, server, console).

Customer deployment portion 1302b sets forth another example customer deployment. More specifically, customer deployment portion 1302b includes RasAgent 1330, SunMC agent 1332, NS server 1334 and Netconnect Agent 1336. RasAgent 1340 is coupled to RasAgent 1330. SunMC Agent 1342 is coupled to SunMC Agent 1332. NSAgent 1344 is coupled to Netconnect Agent 1336. RasAgent 1330 and SunMC Agent 1332 are coupled to remote services proxy 1350a. Metropolis Server 1334 is coupled to remote service proxy 1350b. Netconnect Agent 1336 is coupled to remote services proxy 1350c. Remote services proxies 1350a, 1350b, 1350c are coupled to network portion 1304 either via customer MLM 1352 or directly. The RasAgent is a reliability, availability, serviceability agent. The NSagent is a network storage agent and the NS server is a network storage server. Both the NSagent and the NS server are reliability, availability, serviceability type devices.

Network portion 1304 includes at least one interconnection network such as the Internet 1354 and/or a private dedicated network 1355. Internet 1354 is assumed to be an existing connection that is reused by the remote services system. The private dedicated network 1355 is a dedicated link that is used exclusively by the remote services system to connect the customer to the service provider. The data to manage the private network is provided by directory services technology held within the application server portion 1308. The directory services technology handles all of the domain name service (DNS) services used to manage name to allocated internet protocol (IP) information. The remote services infrastructure also offers transmission over fax from the customer's environment (not shown). The fax communication is for service modules where the fax transmission makes sense. For example, fax transmission may be used in a military site which does not allow electronic information to be transmitted from it.

Data access portal portions 1306a and 1306b provide access to the remote services system 100. More specifically, data access portal portion 1306a includes a service access portion 1360, a customer access portion 1362 and a field information appliance (FIA) 1364. Data access portal portion 1306b includes a partner access portion 1366 and a system management interface (SMI) data access portion 1368.

Mid level manager portion 1308 includes load balancers 1370a, 1370b, MLM webservers 1372a, 1372b, 1372c and communication authentication (CA) and deencryption server 1374.

Application server portion 1309 includes a plurality of application servers 1380a - 1380f. Application servers 1380a, 1380b are associated with transactional and infrastructure data storage 1384a. Application servers 1380c, 1380d are associated with transactional and infrastructure data storage 1384b. Application servers 1380e, 1380f are associated with transactional and infrastructure data storage 1384c. Application server portion 1309 also includes knowledge base 1390a, 1390b. Application server portion 1309 integrates with service applications as well as via generic data export (such as, e.g., XML).

Remote services proxies 1320, 1350 provide a System Management Integrators API. Using this API, system management products can integrate their customized handling of data into the common data format that is used by the remote services architecture. Accordingly, the system management component of the overall system is effectively segmented away from the remote services architecture.

Additionally, by using the remote services proxies 1320, 1350, the remote services architecture leverages much of a pre-existing instrumentation and data collection mechanisms that already exist. Accordingly, already deployed instrumentation agents within a remote service provider existing system such as those from SunMC and Netconnect may be integrated into a remote services system. Additionally, third party systems management systems may also be supported and integrated via the remote services proxies.

Customer deployment portions 1302a, 1302b each show an optional customer MLM component deployed to the customers environment. Whether to deploy the customer MLM component depends on a number of factors. More specifically, one factor is the number of support instances installed in the customer's environment and the number of services being utilized by the customer. A deployed MLM component can allow greater scale capabilities. Another factor is the type of services deployed within the customer environment. Some services are optimized when an MLM component is deployed to the customer environment to support service specific tasks such as filtering and data aggregation. Another factor is the quality of service. Deploying an MLM component provides a greater level of quality of service because the MLM component provides enhanced data communications technology within the MLM infrastructure modules.

The decision of whether to deploy a remote services MLM component (or more) to the customer's environment is a deployment decision. There are a number of architecture deployment classes which are used to meet the varying customer needs.

The remote services system communicates via two main protocols, HTTP and email. Security considerations for these protocols can be chosen by the customer and plugged into the system. For example, the HTTP protocol may use SSL. Additionally, the email protocol may use some well known form of encryption.

The connections from the customer deployment portion 1302 feed into MLM farms which reside within the SMI service provide environment. These MLM farms are sets of redundant web servers 1372 that are balanced using conventional load balancing technologies. Alongside these web servers 1372 are infrastructure servers 1374 which provide specific infrastructure acceleration for decryption and distribution of certificates for communications authentication.

These MLM farms provide a plurality of functions. The MLM server farms provide remote proxy connections. In deployments when an MLM is not deployed to the customer, the customer's proxy connects to the MLM farms within MLM portion 1308. Also, in deployments when a customer MLM 1322, 1372 is present, the MLM farm communicates and manages communication with the deployed customer MLM 1322, 1372. Also, the MLM server farms provide data processing capabilities, e.g., the MLM farms provide application specific tasks to prepare data for passing to the remote services application server portion 1309. Also, the MLM server farms provide access points for the customer and service personnel via browser like connections. The MLM farm generates the HTML that is presented to the browser.

In an example the MLM technology is based upon known web server technology such as that available from Sun Microsystems under the trade designation iPlanet. Plug-in functionality is provided by the servlet and JSP interfaces available as part of the web server technology.

The remote services application servers 1380 provide data processing and storage for the remote services infrastructure as well as for any hosted service modules. The remote services application servers 1380 are based upon known application server technology such as that available from Sun Microsystems under the trade designation iPlanet application server 6.0. The remote services application server 1380 provides support for horizontal scalability, redundancy and load balancing. Thus providing the back-end components of the remote services architecture with a high level of built in assurance and flexibility. Application partitioning of the application servers 1380 provides processing distribution to ensure that heavy processing that may be required by more complex services are handled appropriately without affecting the remainder of the remote services architecture.

Application server portion 1309 provides integration into existing business systems, generic data export and tight integration with existing knowledge base implementations 1390. Data export is handled through structured XML, data can be exported asynchronously by a client registering to receive data of a particular type or synchronously by the application server 1380 accepting a request from a client.

In an example the core service module API is provided by the application server 1380 using a J2EE implement API. The basic container services of J2EE are extended to provide remote services specific functions and to create the basis of the API. Accordingly, a service module creator can rely on a number of provided for services, such as database persistency, high levels of atomic, consistent, isolated, and durable (ACID) properties, directory service access, authorization protection for the data and access to the data collected by the remote services infrastructure itself.

The creation of a service module, which provides the technology to support a specific remote service, involves at least one of the following components: a creation of detection/collection logic component; a mid-stream analysis and management of data component; an analysis and storage of data component; and, a presentation and management of the data/knowledge component.

The detection/collection logic is created within the domain of a systems management toolkit. The mid-stream analysis and management of data is an optional step and effectively provides analysis of the data within the customer's environment. Inclusion of this logic would mean that the mid-stream analysis and management of data service module would have a remote services MLM deployed to the customer's environment 1302a, 1302b. The deployment of the remote services MLM to the customer's environment reduces and manages the data being sent over the WAN to the remote services provider. The analysis and storage of data component is performed within the application servers domain (the component may be exported). This analysis and storage of data component turns data into knowledge and service value that can then be presented back to the customer. The presentation and management of the data/knowledge component is where the data and knowledge that is developed from the analysis and storage of data component is presented to the customer or service personnel. The presentation and management of data/knowledge component may include interactive support to provide modification of the data values.

Referring again to Figure 12, the remote services infrastructure 102 supports classification of service modules. These classifications are based upon the communications characteristics and data typing of each service module. More specifically, the service classifications are built into the remote services system 100 to provide three functions.

An API function is provided for service creators who are creating services categorized by a service classification. Functionality is built into the infrastructure 102 to assist in the basic needs of the service.

A normalization function is provided to normalize data being sent. For example, the monitoring data classification defines the data types that are passed through the remote services infrastructure, with extensibility for specific service modules 103. This function allows the remainder of the remote services system 100 to manage the data irrespective of the systems management system being used.

A segmentation function is provided which provides segmentation of the communications system. The service classification may be used to model the communications systems within the remote services system 100. For example, remote access uses session based communications.

The service classifications are exposed into the remote services architecture in the remote services proxy 210, the intermediate MLM 216, the applications MLM 218 and the remote services application server 226. More specifically, the remote services proxy 210 constructs the data abstractions through the API calls made to it from the systems management integrator API 430. The intermediate MLM 216 exposes access to the service classifications through the service module API 432 that the intermediate MLM 216 hosts. The applications MLM 218 uses service classifications to decode the information that is arriving from the customer and to construct data that is mostly infrastructure information based for back-channel purposes. The applications MLM 218 uses service classifications to understand the type of communications that are used for the service requirements. The remote services application server 226 uses service classifications to present certain API functionality within the service module API 436.

The data that is sent through the remote services system 100 is separated into the layers set forth in Figure 12. The details of the data blocks 1202, 1204 and 1206 can be seen in the XML document type definition (DTD) set forth below.

To support the management of infrastructure components in the remote services system 100, the remote services API's support a plurality of actions. More specifically, the remote services API's support a heartbeat/getStatus action, and a diagnostics action, a software update action. The heartbeat getStatus action returns the status the various modules within the remote services system 100. The diagnostics action provides diagnostic services including ping (a very basic heartbeat), a cold start trap (when the remote service proxy is brought up) and shutdown (when the remote services proxy is shutdown. The software update action provides software update services to the service module 103, the remote services proxy 210, the integrator 212 and the MLM service module 103.

The remote services API's also support the additional actions of disabling/enabling a support instance, disabling/enabling of a remote services proxy's forwarding of data, proxy or MLM configuration change, get configuration from system management proxy or MLM and deregister integration module (when the integration module is to be moved, removed etc.).

As shown in Figure 12, all short messages between the application server 226 and the remote services proxy 210 are in XML format and are in two sections, a header section and a content section. The header represents information about the message itself such as source/destination, routing statistics, message type, etc. The content section holds the actual payload (i.e., the message from or to the systems management platform N06).

Because the various MLM's may need to perform filtering and/or event aggregation, the actual body (content) of the message is represented as one of the following types: alarm, event, message response, bulk data request, bulk data response or data. An alarm is a systems management alarm. An event is a system management event. A message response is a response to a sent message. A bulk data request is a request to sent bulk data. A bulk data response is a response to send bulk data. Data is generic data content which is specified by class/subclass in the header.

The data type functions as a catch all and has no fields other than the content itself, whereas the other content elements contain specific attributes which allow for introspection for routing and other purposes by a service module 103.

The integrator API 430 is responsible for the creation and formatting of the XML message from the remote services proxy 210 to the remote services system 100. The integrator 212 may or may not send its systems management specific data in XML. However, if the content type is binary, the encoding is specified to ensure that the content can be decoded correctly by the server 226.

A message handling API is provided to simplify creation of and access to the content of a remote services message without the caller having to be concerned about the message format.

The DTDs for the XML messages are for both forward and back-channel messages. The primary distinction is that the forward channel messages contain a source element which details where the message originated (in the remote services system 100) and some quality of services (QoS) parameters. The Back-channel message, however, contains the destination element which defines how the message is routed through the remote services system.

Detailed tag descriptions are given after the DTD itself.

The XML namespace used of a remote services message is:
xmlns=http://rs.sun.com/

The namespace is defined in the envelope for the message as:
<rsmessage xmlns=http://rs.sun.com/>

The envelope of the message wraps one or more remote services messages, each containing a single message header and a single message content element. In a forward channel request, there is typically a single *rsmessage* element contained in the envelope. However, because a back-channel request contains a response to the sent message as well as zero or more pending back-channel messages, the *reenvelope* may contain more than one *rsmessage.* A back-channel message contains at least one message, the response to the sent message.

The envelope is defined using MIME with a multipart/related media type, with each header and body block separated from the rest by a MIME boundary specifier. In specifying the envelope this way, parsing and processing of the remote services message header may be performed independently of the processing of the content. This allows faster handling of message routing, header manipulation and publishing in the application server C26.

An example envelope containing a single message is shown in Table A.

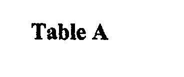

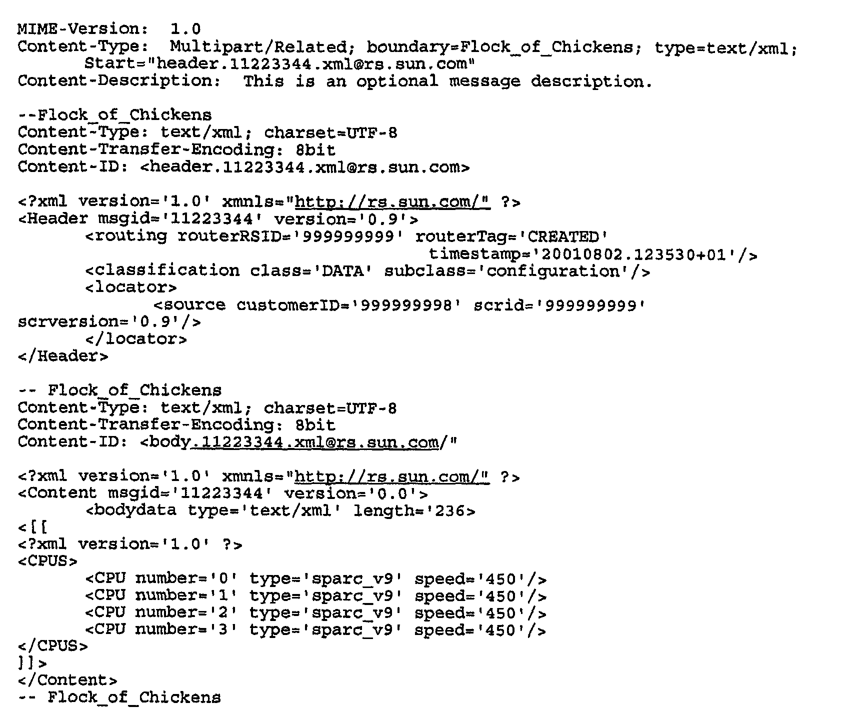

The Content-Type header is split into two lines for readability. Each part of the message is separated from the other parts by a MIME boundary, in this case Flock_of_Chickens. The Content-ID for each part of the envelope defines its contents, either a header or body, together with the message ID.

The message includes a message header DTD and a message content DTD. The message DTD header tag encapsulates a number of elements which describe information such as source and destination, routing statistics and origination. A message includes one header element and one content element.

The content tag encapsulates the actual content of the remote services message. The content tag may be one of a number of distinct types. The specific content types allow service modules 103 in the MLM's to quickly decide whether or not they are interested in the content without having to introspect the whole content and understand the formats used by various system management platforms to represent their messages. The components of alarms and events are encapsulated in the attributes of the body of the content.

The data classification section allows for routing of a message to interested service modules 103 by specifying the message class and subclass. This data is used by the MLM's and service modules 103 to determine whether or not to process the message.

The locator tag contains an enumeration which specifies whether the header contains a source route (i.e., the message originates from the proxy 210) or a destination route (i.e., the message originates from the remote services system 100). For data originating from the proxy 210, the destination is configured into the communications layer and is not known to the proxy itself. Whereas, when a message is sent from the remote services system 100 to a specific integration module, the applications MLM 218 needs to know to which intermediate MLM 216 to route the data. The intermediate MLM also needs to know to which proxy 210 to route the data.

The source tag indicates that the message originates at the remote services proxy 210 and contains some attribute definitions defining where the message originated, together with the version of the originating component. The source element also contains a sub-element which defines some parameters used by the proxy_and possibly the MLM's in determining how and when to queue the message. The sub-element is the quality of service element.

The quality of service (QoS) tag defines an empty element with some attributes which help the proxy 210 and possibly the MLM to decide how to queue the message. This tag is valid for outgoing messages from the remote services system 100. The attributes to the QoS tag are expiry, precedence and persistence. The expiry attribute indicates the time at which the data in the message expires. The precedence attribute provides the priority of the message. The persistence attribute specifies whether or not the message should be held in a queue at the expense of others with equal precedence and expiry times.

The destination element is a backward message and its attributes specify the ids for the customer MLM and proxies to which the message should be routed. Back-channel messages may have multiple destinations as they can be directed to an MLM group or to a proxy group. In case of multiple destination, the addresses are expanded at the message creation by the remote services system and all the final destinations are entered.

A backward message cannot be targeted to multiple MLM groups and thus, the infrastructure component to reach the final destination is always unique. The one exception when multiple paths are possible, when the destination is a support instance reachable through a redundant systems management system integrated to redundant proxies. When a backward message targets multiple destinations, it is the role of the intermediate MLM 216 to duplicate the message, once per final destination.

The routing element contains information about the route a message takes to and from the proxy 210. The routing element is primarily used for debugging and statistical purposes so that the cause of any holdups in the infrastructure 102 to any customer may be readily determined. All modules which route a message append their own routing element to the message header.

The alarm element represents basic, generic information about an alarm from a support instance as well as any integration module specific information which may be used by the service modules 103 to provide more detailed information to the remote services system 100. Generic alarm information is set as attributes in the element and the textual contents of the element represent the actual alarm message. Integration module specific data is captured through the data sub-element. Data for the alarm element is captured through a *sendAlarm* function in the integration API.

An event differs from an alarm as the event has no state associated with it. That is, an event is a notification from a support instance of a change of state of some component. The event element encompasses the generic information about an event as its attributes, with the event message being the textual content of the element. Integration module specific content is specified in the data sub-element. Data for this element is captured through the *sendEvent* function of the integration API.

The message response element functions as a container for the return status of the processing of a message. The message response element contains attributes and subelements which specify any error condition and allow the receiver to determine how or whether to try to resend a message.

The bulk data request element specifies a request to a service module 103 (in the application server 226, intermediate MLM 216 or proxy 210) to transfer some arbitrary data whose size is (typically) greater than 4Kbytes. The service module 103 which receives this request determines whether or not it is able to process the request (from the specified size and class/subclass) and if so, sends back an acknowledgement (i.e., a bulk data response) which indicates the location to which the bulk data message is sent. This location is likely an out of band URL.

The bulk data response element is sent as a response to the bulk data request message. The contents of the bulk data response element are attributes indicating whether or not the request was successful (an if not, why not), a URL to send the bulk data to when the request is approved and the message id of the request to allow the sender to associate the response with a particular request.

The data element is a catch all for any other type of data which is sent between the remote services proxy 210 and the application server 226 (or vice versa). The data element has attributes specifying the MIME type and data size.

The message header DTD is set forth in Table B.

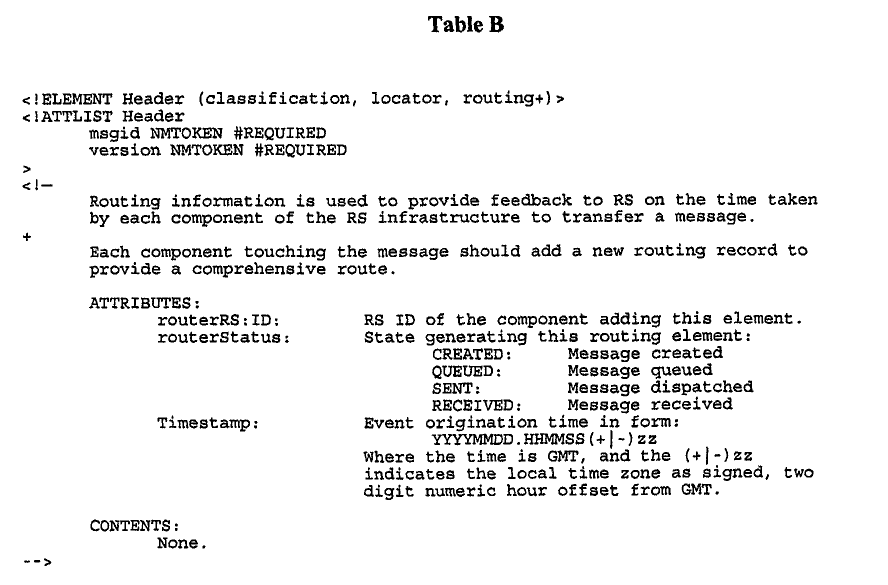

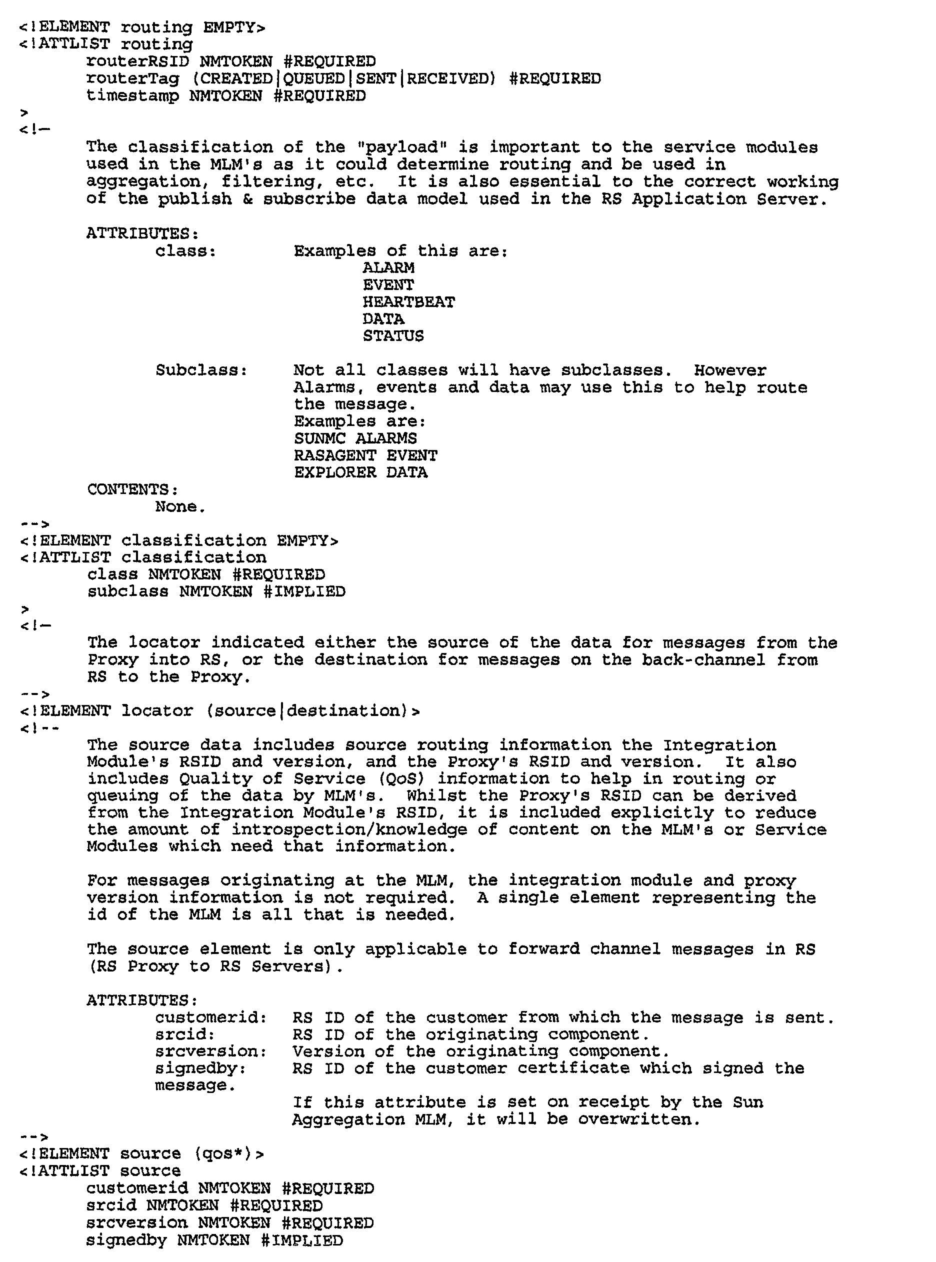

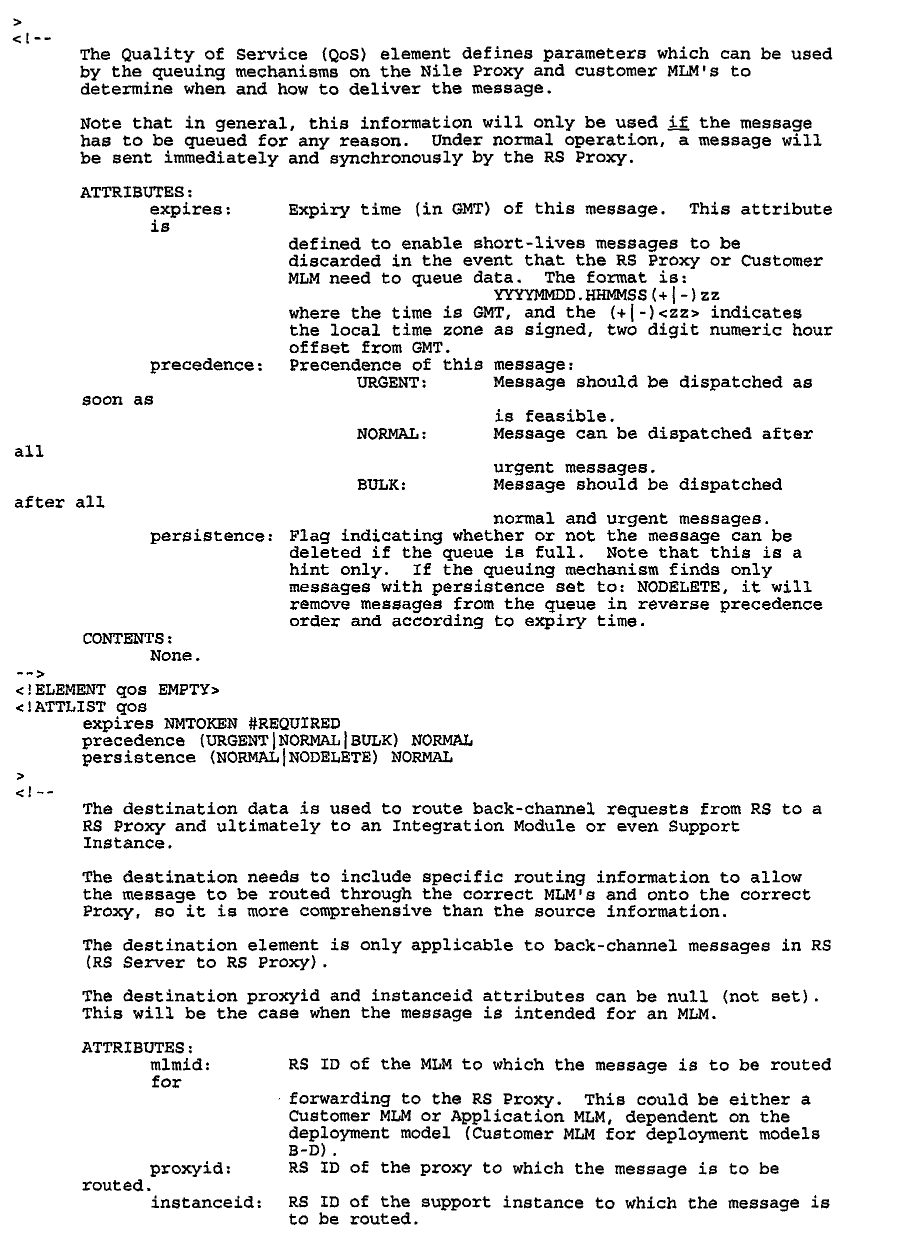

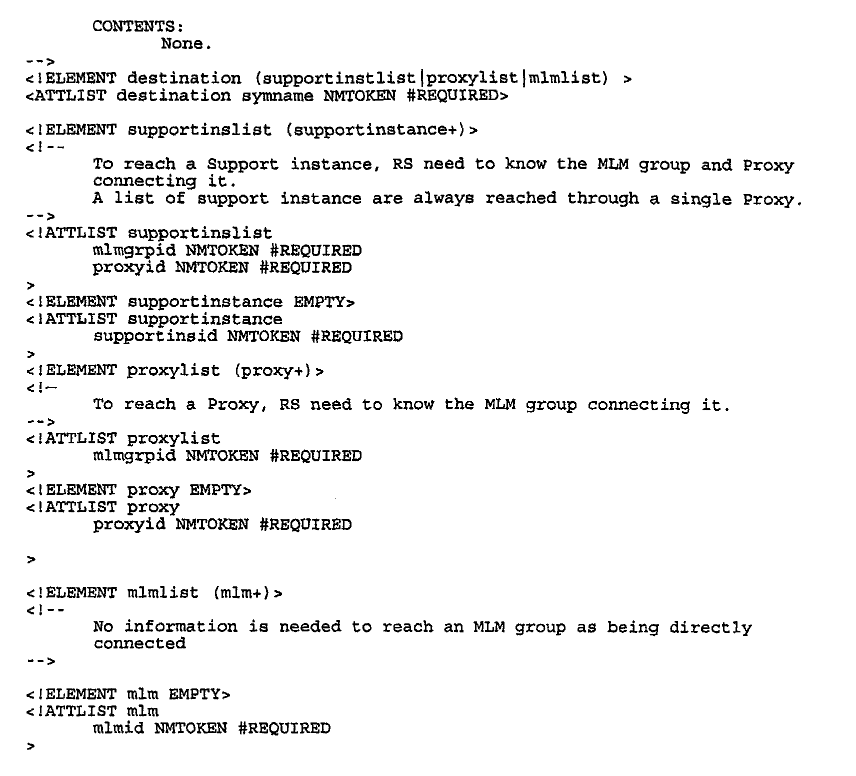

The message content DTD is set forth in Table C.

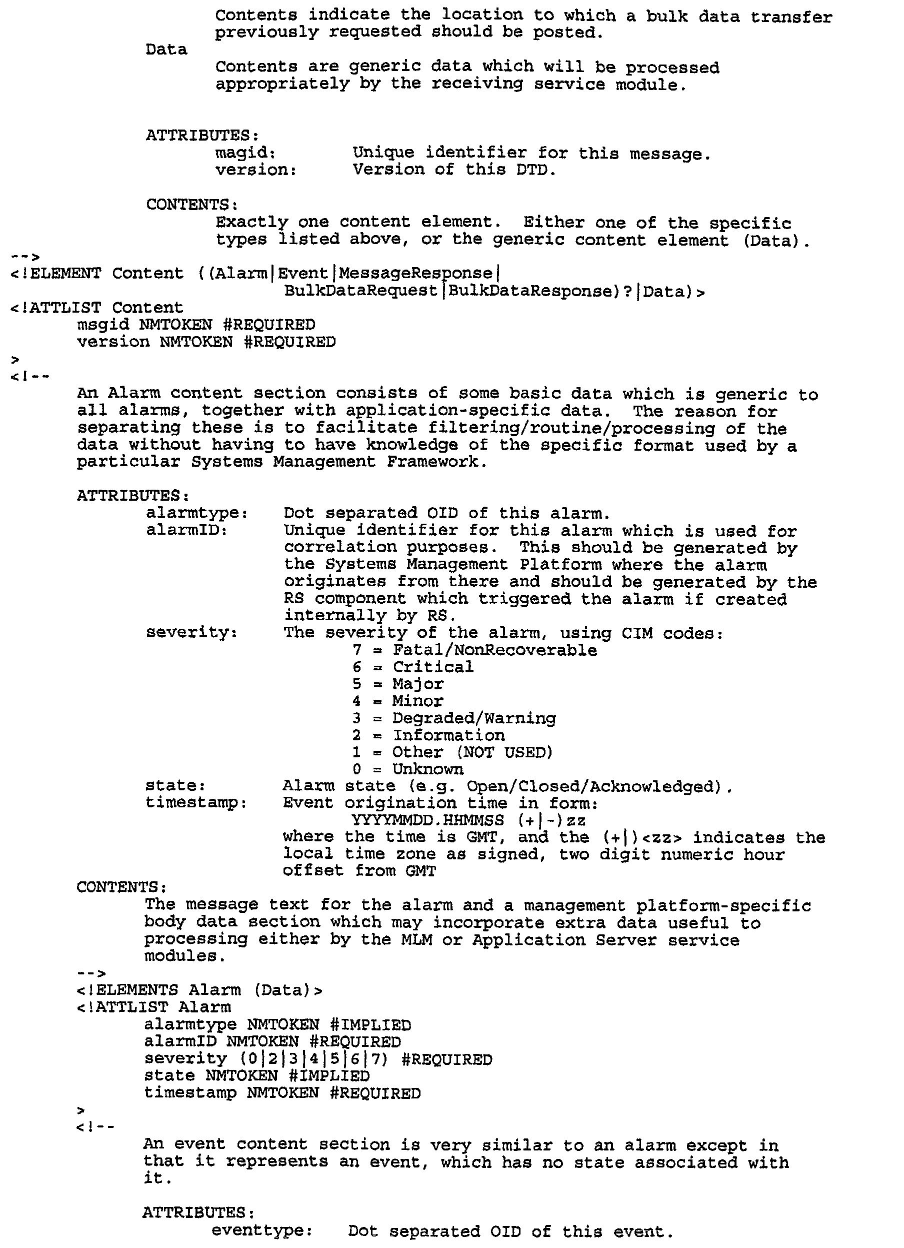

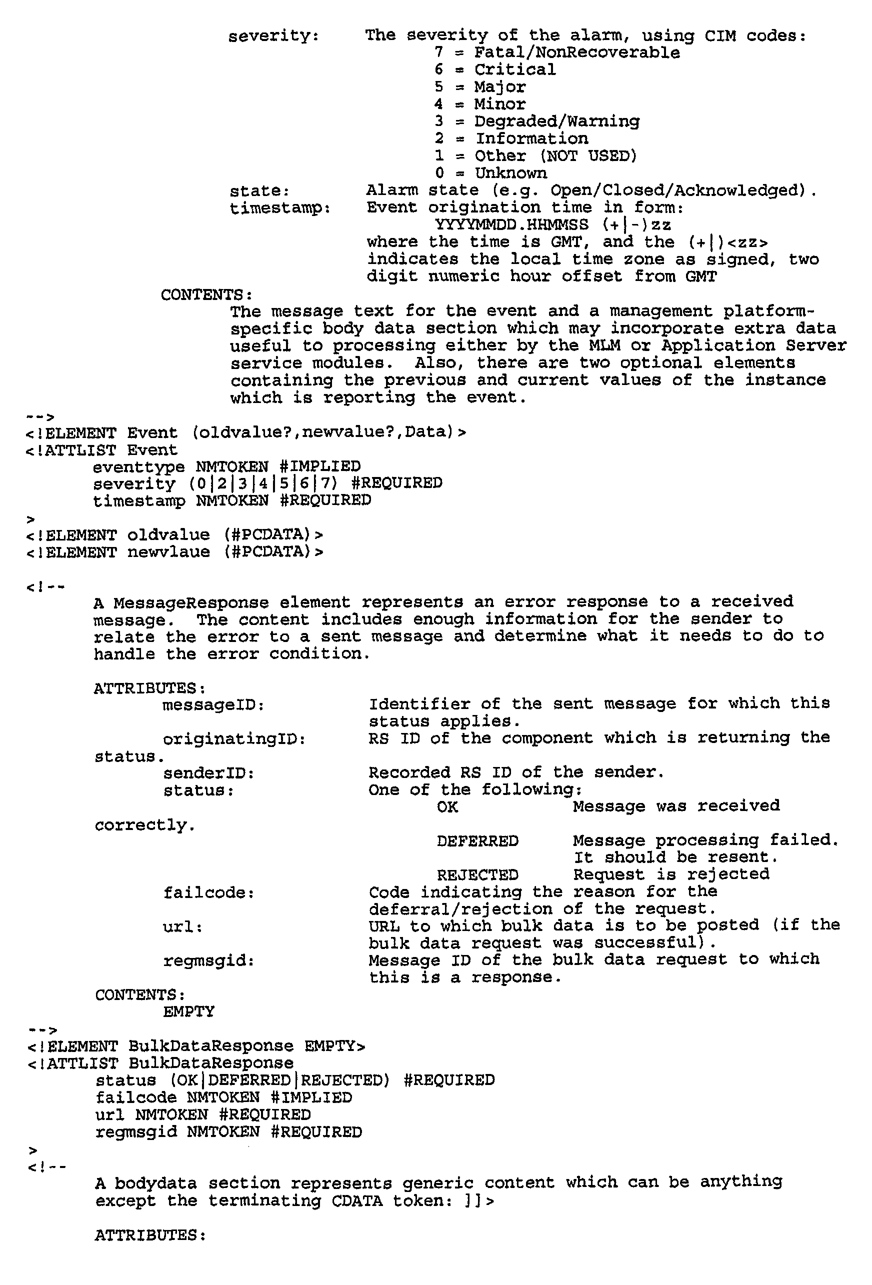

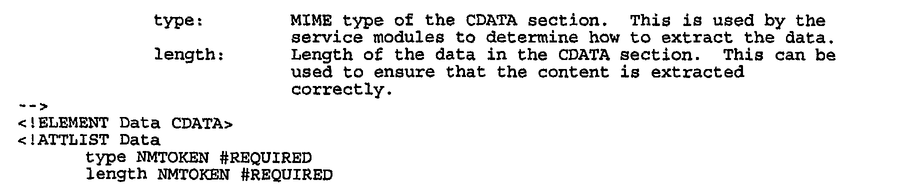

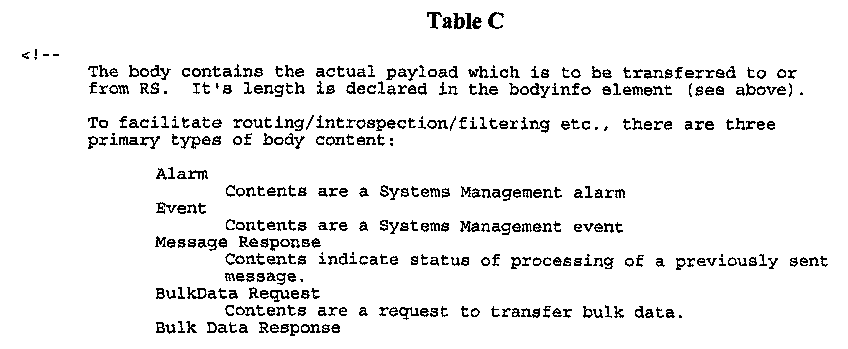

The heartbeat or status message from any remote services component to the remote services application server 226 allows the infrastructure 102 to determine what components are alive and to generate notifications when a component or components appear to be failing or failed.

The heartbeat message is a well formed XML structure which is contained in the data section of a remote services message. The MIME type (set in the attributes of the data element) is text/xml. In the header of the message which contains the heartbeat content, the class is sent to infrastructure and the subclass to heartbeat. This enables such messages to be directed to interested service modules 103.

The structure of the message is a hierarchy where each component may be a subcomponent of another if that is how the relationship can be represented by the infrastructure. For example, the status for a proxy 210 includes the status of any integration modules currently registered. Each integration module includes the status of the systems management platform and may also contain the status of any support instances being managed.

The heartbeat status message DTD is set forth in Table D

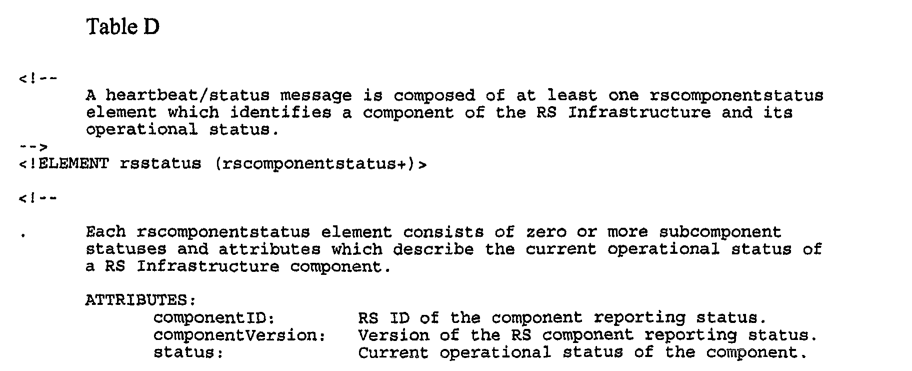

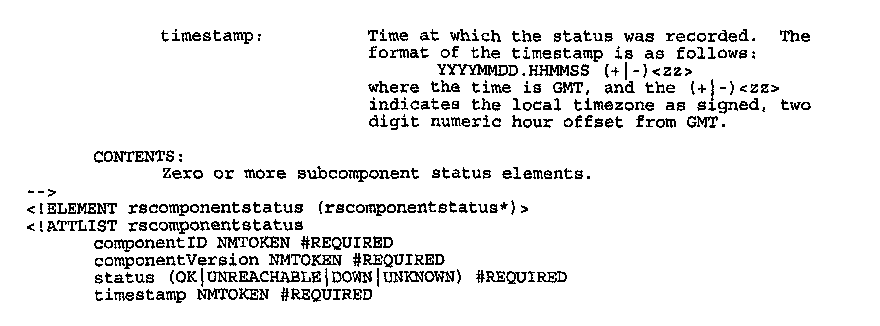

Referring again to Figure 11, dataflow within the remote services system 100 follows one of two paths. The first path is followed by a short message, reaching the remote services system 100 via the remote services proxy 210 to ultimately reach the remote services application server 226. Forward short messages are sent up the tree and no destination is needed to the application server as only one path exists. These messages need not be duplicated. These messages are not intended for multiple destinations, although multiple service modules 103 may ultimately process the contents of the message. In session mode, these communications are synchronous. Back-channel communications follow the other path, from the application server 226 to the remote services proxy 210. The communications may be targeted to multiple destinations and thus may be duplicated.

The remote services system 100 exchanges information between multiple components. The information is classified in two types, a short message type and bulk data type. With the short message type, short XML messages are used to send information harvested by the remote services proxy 210 to the application server 226 to acknowledge receipt of messages or to transmit control messages to request bulk transfer. Bulk data type is used to transfer data whose size is greater than, e.g., a few kilobytes, between both ends of the remote services system 100.

More specifically, a short message can contain monitoring data, such as events or alarms, a response to a message sent in the other direction, bulk data transfer request or response infrastructure control message or other data.

When in session module between components of the infrastructure 102, the delivery of a short message is synchronous between the send and the receiver. Thus, to ensure the delivery of a message, the message sender implements a spooling queue to store messages waiting to be delivered.

Short message content is visible to any component of the infrastructure 102. The components on the transit path of a message may trigger some action based on the message contant or other parameters like communication parameters, throttle, or time of day. These actions can include filtering (e.g., discarding) the message, aggregating the message, modifying the message, or creating a new message.

Aggregation is a special case where multiple messages are replaced by one message. Components implementing an aggregation function accept the message and return to the sender an acknowledgement (if in session mode), store the message in a processing queue, process this queue when the control triggers are reached, create a new message aggregating the queued messages, delete the queue and send the new message. The components that are acting as sender of the new message also provide, as any sender, a spooling queue in case the destination is not reachable.

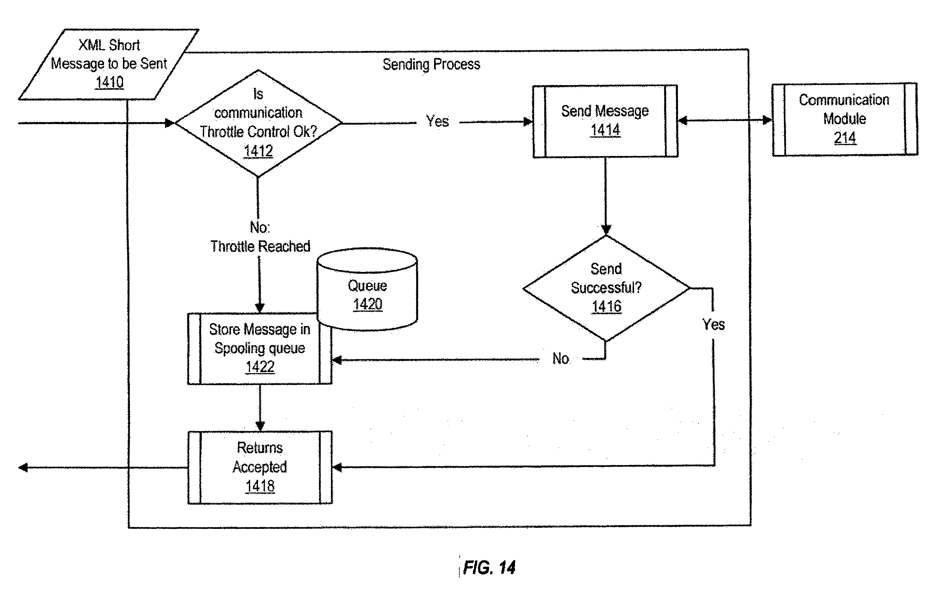

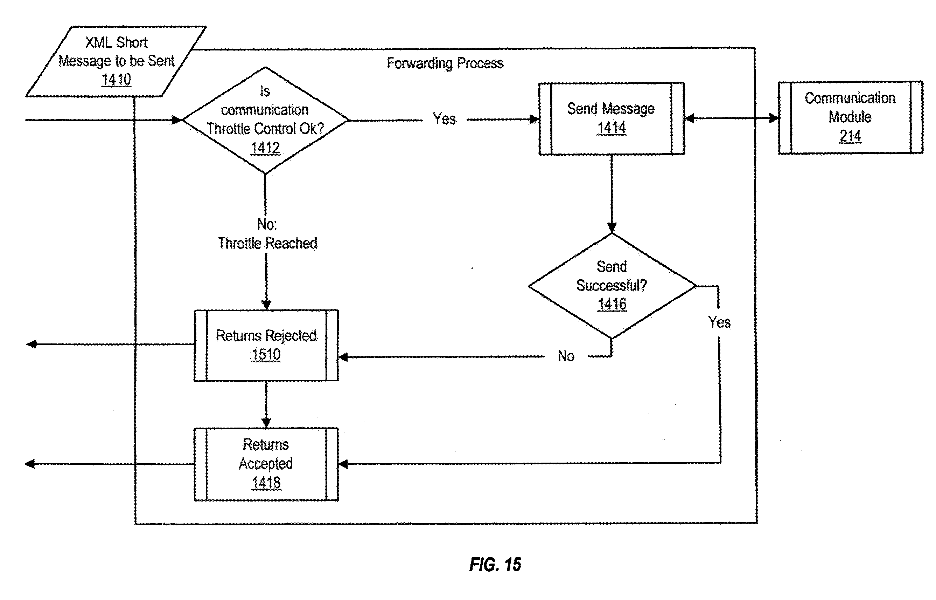

Figure 14 shows a flow chart of the different tasks associated with the sender of a message. Figure 15 shows a flow chart for a component forwarding a message. More specifically, when a short message is sent at step 1410, the message is first checked to determine whether the communication throttle control is okay at step 1412. If the throttle control is okay, then the message is sent at send message step 1414 to communication module 214. The sent message is then analyzed to determine whether the send was successful at step 1416. If the send was successful, then the returns accepted message is generated at step 1418.

For the sender of a message, if the throttle control is not okay, i.e., the throttle has been reached, then the message is stored in spooling queue 1420 at step 1422. A returns accepted message is then generated at step 1418. The queue 1420 queues messages ready to be sent waiting for the communication channel to be available. No processing is done on these messages. The queue ensures that each message is delivered to its destination. Because the message is always either transmitted or spooled, the sender never returns a rejected code. It is up to the process managing the queue to return a rejected code whenever a queued message is pruned out.

With a component forwarding a message if the throttle has been reached, the message is not stored within a queue, but is returned to the sender at returns rejected step 1510.

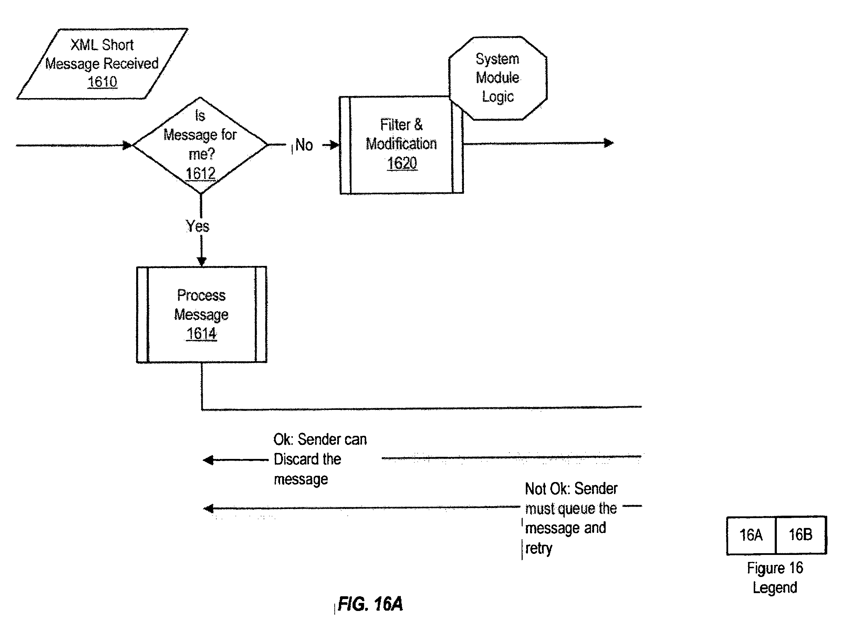

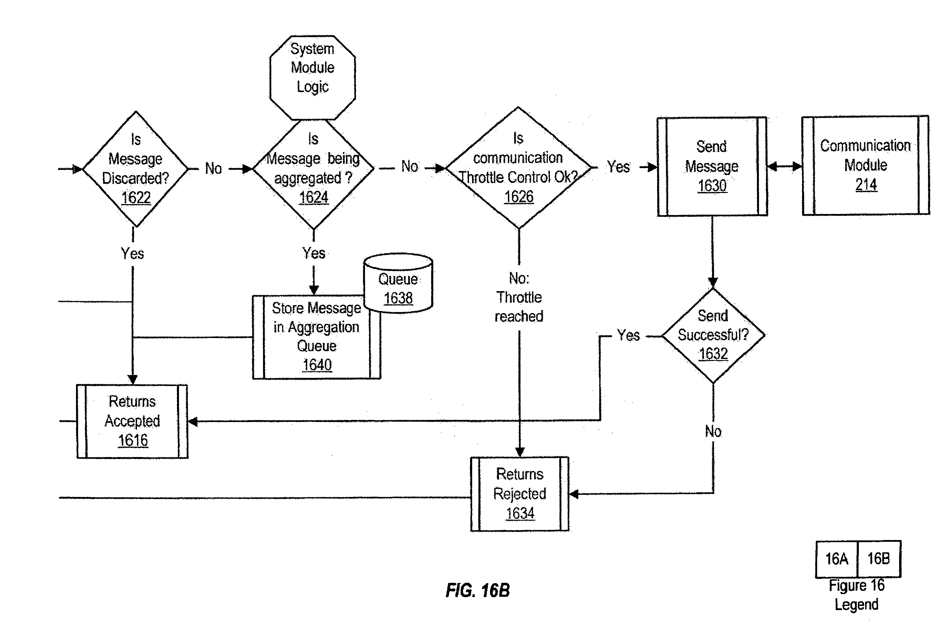

Referring to Figures 16A and 16B, a flow chart of the overview of the data flow of the intermediate receiver is shown. The path from a sender to the final destination involves the intermediate MLM 216, be it a customer MLM or an aggregation MLM. When the message is received at step 1610, the intermediate MLM 216 determines whether the intermediate MLM 216 is the intended recipient of the message at step 1612. If yes, then the message is processed at step 1614 and a returns accepted message is generated at step 1616, thus indicating to the sender that the stored message can be discarded.

If the intermediate MLM 216 is not the intended recipient, then the intermediate MLM 216 then performs a filter and modification function at step 1620 using the system module logic of the intermediate MLM 216. The message is then reviewed to determine whether the message is to be discarded as a result of the filtering at step 1622. If the message is to be discarded then a returns accepted message is generated at step D16. If the message is not discarded then the intermediate MLM 216 determines whether the message is to be aggregated at step 1624 using the system module logic of the intermediate MLM 216.

If the message is not to be aggregated, then the communication channel is reviewed at step 1626 to determine whether the throttle control is okay. If so, then the message is sent at send message step 1630 via communication module 214. The message is also analyzed to determine whether the send was successful at step 1632. If the send was successful, then the returns accepted message is generated at step 1616. If the send was not successful, then a returns rejected message is generated at step 1634. The returns rejected message indicates that the sender should queue the message again and retry sending the message.

If the message is to be aggregated, then the message is stored in the MLM aggregation queue 1638 at step 1640. The result of the aggregating is a new message created from the queued messages. To send this new message, the intermediate MLM 216 functions as a sender and thus follows the process with respect to senders described above. The message is then recycled through step 1622 when the message is being aggregated. If the throttle control is not okay, then a returns rejected message is generated by step 1634.

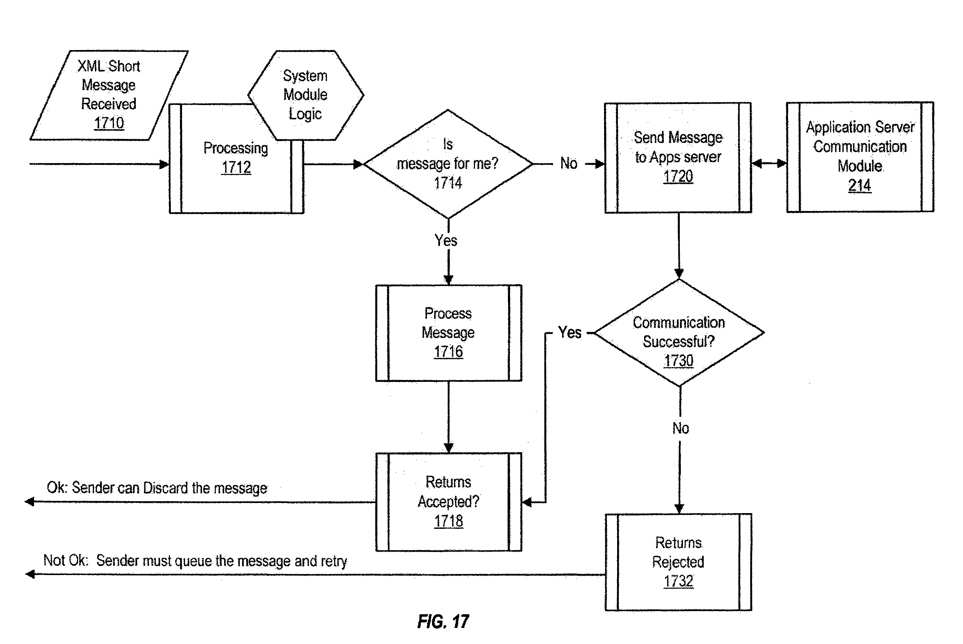

Figure 17 shows a flow chart of the data flow of receiving a message. The applications MLM 218 is an example of a module that receives messages. Because no aggregating or filtering is done, the data flow is simpler than that of an intermediate MLM. The communication is synchronous and does not involve any queue mechanism.

More specifically, the message is received at step 1710. Initial processing is performed at step 1712 using the system module logic of the receiver. The message is then reviewed to determine whether the receiver is the intended recipient at step 1714. If so, then the message is processed at step 1716 and a returns accepted message is generated at step 1718.

If the applications MLM 218 is not the intended recipient, then the message is sent to the application server 226 at step 1720 and communicates with the application server communication module 214. If the communication is successful as determined by step 1730, then a returns accepted message is generated at step 1718. If the communication is not successful, then a returns rejected message is generated at step 1732.

Referring again to Figure 11, messages on the reverse (i.e., backward) path through the remote services system 100 (i.e., from the application server 226 toward the customer network) are transmitted over the back-channel. Back-channel communication applies to session mode communication as the message mode has no back-channel. Some message types (e.g., administrative control or bulk transfer request/ response) may have multiple destinations, representing a group. The remote services system 100 optimizes the transfer of such messages to reduce network traffic.

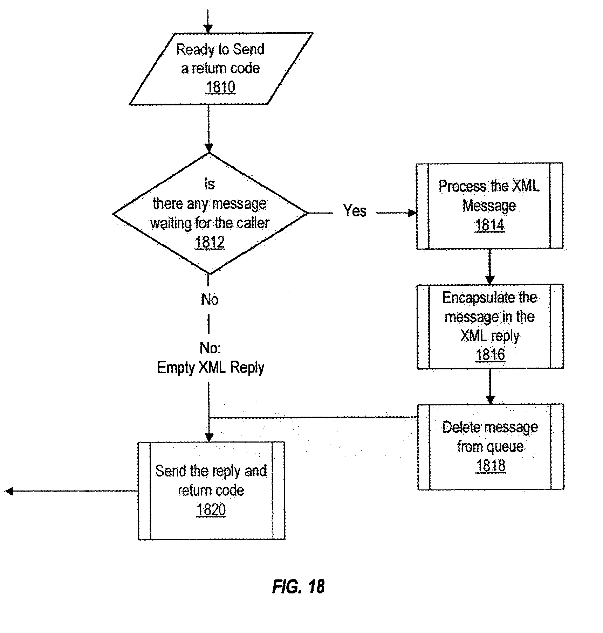

Figure 18 shows the data flow for the back-channel sending process. Messages are transmitted from a downstream component to the other upstream components over the back-channel. Each HTTP post request may have in its reply a block of data, in this case an XML formatted message.

The back-channel data is transmitted as a reply to an existing request. To send data over the back-channel, the remote services system 100 has, on each component of the path from the data destination to its application MLM 218, to spool the back-channel data until the next component opens a connection. Sending back-channel data is part of the returns steps 1418, 1510, 1616, 1634, 1718, 1732.

During the back-channel process, the component determines whether the component is ready to send the return code at step 1810. In addition to returning the appropriate code to the sender, the component determines whether there are any messages waiting for this sender in reply at step 1812. If there are messages waiting, then the component processes the XML message at step 1814. The component then encapsulates the message in an XML reply at step 1816 and deletes the message from the queue at step 1818. The component then sends the message and return code at step 1820.

If there were no messages waiting, then the component sends the return code along with an empty XML reply at step 1820. Reception of the back-channel message is done while the requester is receiving a return status from a synchronous HTTP command. Back-channel queues are interrogated for any pending messages that belong to the caller. When an intermediate MLM 216 calls in, the intermediate MLM 216 receives all the back-channel messages for any component reachable through that MLM.

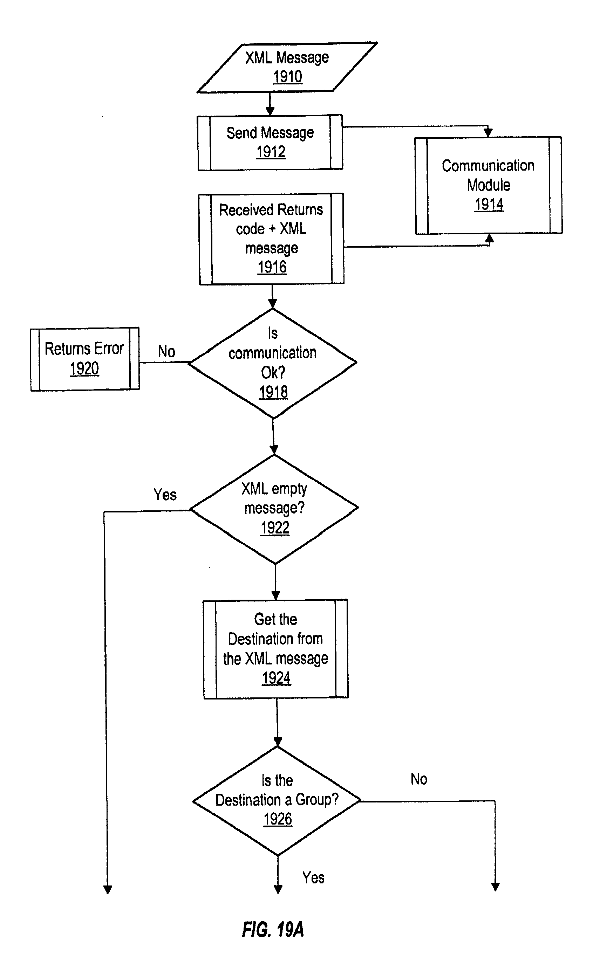

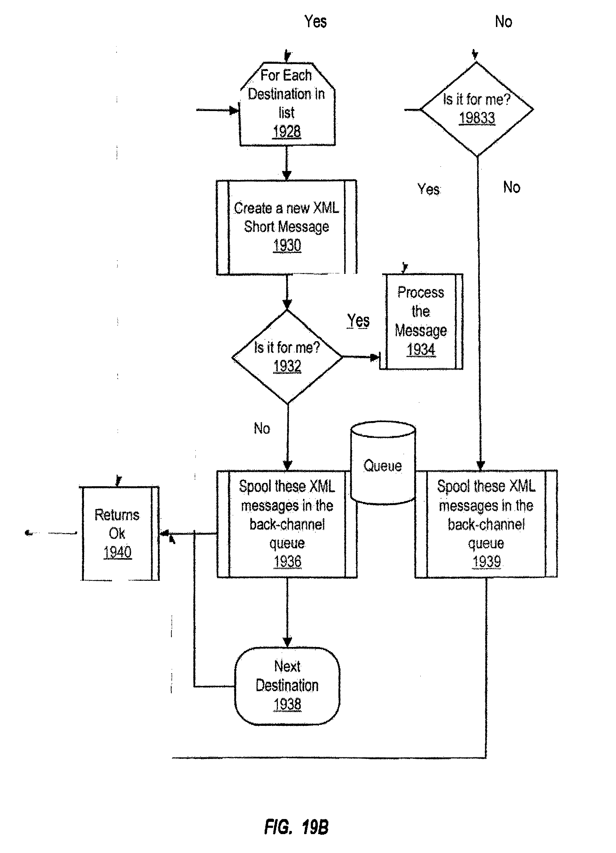

Figures 19A and 19B show a flow chart of controlling message address expansion for groups. More specifically, messages from the applications MLM 218 or other remote services components which are in the class of software update requests or configuration change requests (i.e., control messages) are often intended for a group of components rather than an individual component. The remote services system 100 optimizes network traffic by allowing such control messages to use a group as the destination of the control message. The intermediate MLM 216 expands this group and redistributes the control message to each of the group members.

More specifically, steps 1910 - 19 24 are as describe above. When the destination is obtained at step 1924, then at step 1926 the MLM determines whether the destination is a group. If the destination is for a group, then a loop is entered for the group at step 1928. A new short message is created for each destination in the group at step 1930. The message is also reviewed to determine whether the message is intended for the MLM at step 1932. If the message is for intended for the MLM then the message is processed at step 1934. If the message is not intended for the MLM as determined at step 1932 then the short message is spooled to the queue at step 1936. After the message is spooled to the queue, then the group is reviewed to determine whether there are any additional destinations in the group at step 1938.

If the message was not for a group, then the message is reviewed to determine whether the message is intended for the MLM at step 1933. If not, then the message is spooled in the back-channel queue at step 1939. After the loop has completed then control transfer to returns step 1940 which functions as discussed above.

While control messages are inserted into the back-channel queue in the send block, the control messages are redistributed to their destination by the return block as discussed with reference to Figure 15. The remote services system 100 examines the content of a control message to optimize bulk data transfer when the destination of the transfer is a group.

Bulk data transfer may also occur in a number of situations including bulk data, software update and configuration change. With a bulk data situation, bulk data may be transferred from a serviced host (e.g., the host to which the systems management platform is coupled) to the applications MLM 218. With a software update situation, when new or updated software packages become available it is desirable to distribute the software update to the various remote services components. With a configuration change situation, when something has changed on the customer configuration, a new configuration file may be pushed out to all impacted remote services components. With the bulk data situation, the data is transferred from the customer network to the applications MLM 218. With the software update situation and the configuration change situation the data is transferred from the application server 226 to the remote services components on the path to the customer network.

Because bulk data transfers may be network and disk space intensive, the remote services system 100 uses a preauthorization process. With the preauthorization process each component wishing to perform a bulk data transfer first obtains an authorization before starting the actual transfer. The component uses a short message to request the bulk data transfer and provides the opportunity for any component on the transfer path to reject the authorization request. During a bulk data transfer, none of the components on the transfer path have access to the bulk data content, because this content has no meaning to the components other than to the intended recipient.

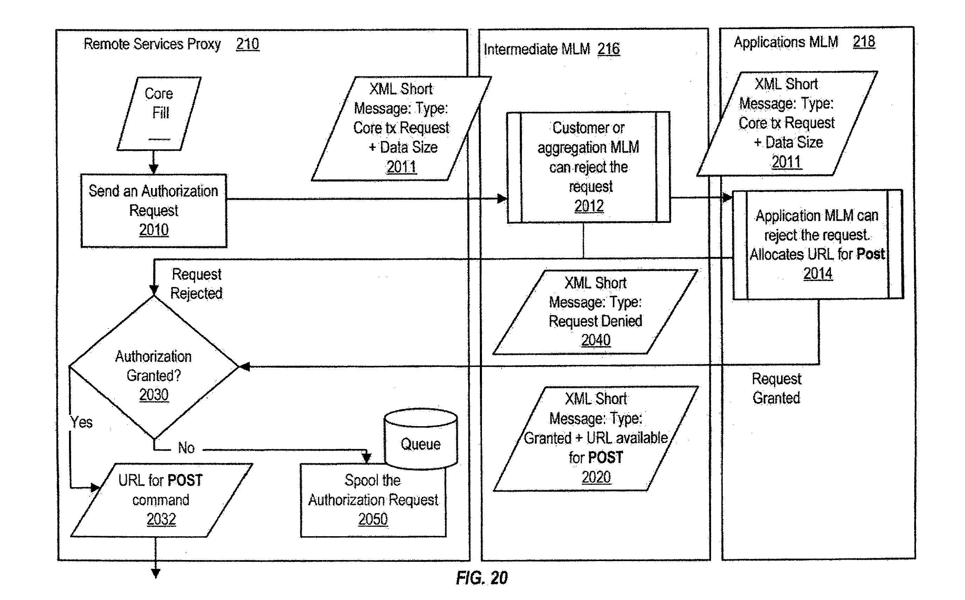

More specifically, referring to Figure 20, a bulk data transfer from the customer network is started by the proxy 210 sending an authorization request at step 2010 to the intermediate MLM 216 using an XML short message 2011. The short message includes the core request as well as the data size. The intermediate MLM 216 may reject the request at step 2012. The intermediate MLM 216 also passes the short message 2011 on to the applications MLM 218 which may reject the request at step 2014. If the request is granted then the applications MLM 218 allocates a URL for POST and sends a short message 2020 back to the proxy 210 indicating that the request was granted as well as the allocated URL available for the POST of the bulk data transfer. The proxy 210 reviews the returned message to determine whether the request was granted at step 2030. If the request was granted then the URL for the POST command is generated at step 2032.

If the authorization request is denied (e.g., via short message 2040), then the request is spooled at step 2050 by the proxy 210 for retry, a queue processing watchdog resubmits authorization request.

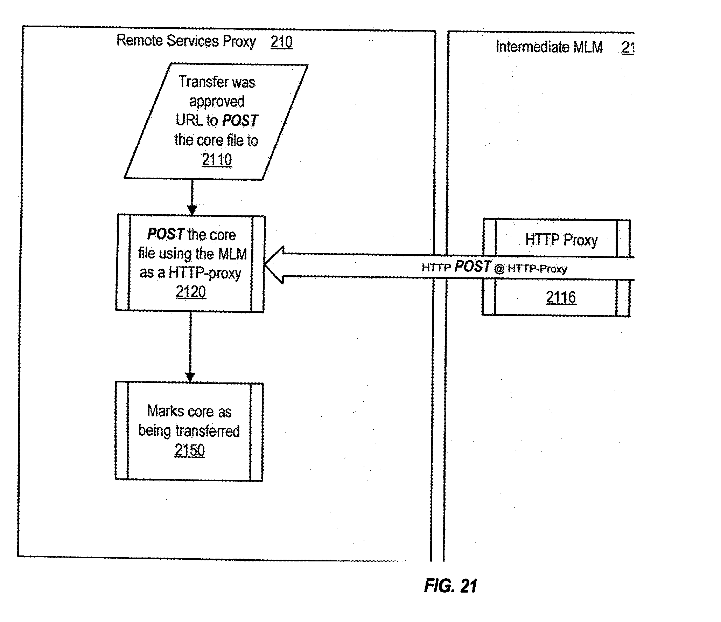

Referring to Figure 21, when the authorization has been approved at step 2110, the proxy 210 initiates the transfer. The transfer occurs between the proxy 210 and the applications MLM 218, which are coupled via the intermediate MLM 216. The bulk data transfer is a one to one transfer as compared to redistributing files to multiple destinations. The data flow of a bulk transfer is substantially the same as for short messages; however, the amount of data transferred may be extremely large. Accordingly, a protocol is used to avoid instantiating the bulk data in the intermediate MLM 216. The remote services system 100 POSTs the core file using the intermediate MLM 216 as an HTTP proxy 2116 at step 2120 to enable an efficient transmission of the bulk data. The applications MLM 218 receives the core file and processes the core file at step 2140. After the proxy 210 transfers the file, the proxy 210 marks the core as being transferred at step 2150.

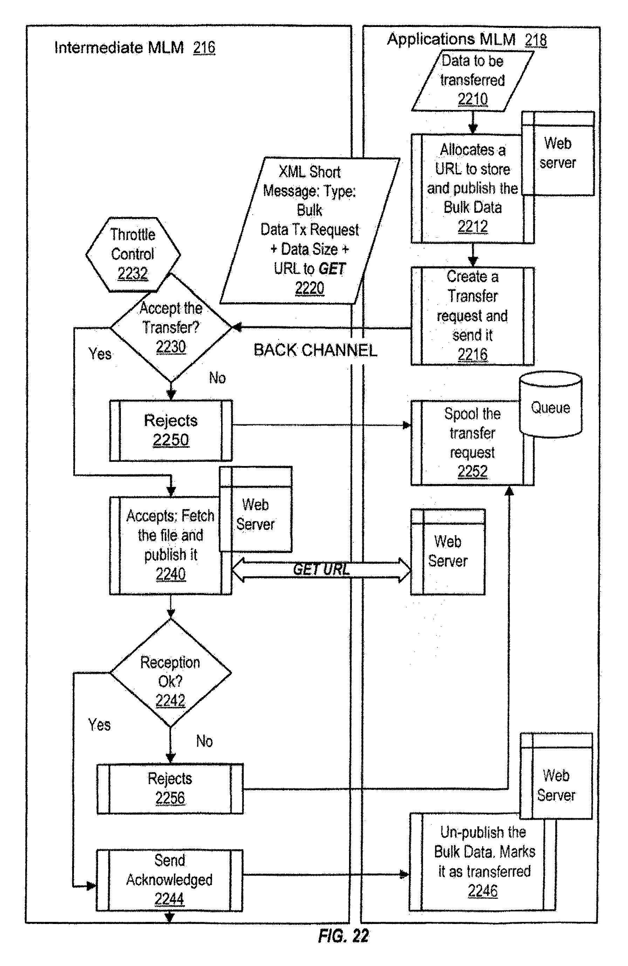

Referring to Figure 22, with the configuration or software download situation, the applications MLM 218 initiates the transfer request. To minimize network traffic and as most of these downloads target more than one component, the remote services system 100 proceeds by fetching the data to the nearest intermediate MLM 216 which is then responsible for redistributing the data to the final destination (i.e., the intermediate MLM 216 performs the multicast).

More specifically, the applications MLM allocates a URL to store and publish the bulk data to be transferred 2210 at step 2212 using a web server 2214. The applications MLM 218 then creates a transfer request and sends the request via the back-channel at step 2216. The short message 2220 requesting the transfer includes the data transfer request, the data size and the URL location for obtaining the data. The intermediate MLM 216 can then determine whether to accept the transfer at step 2230. The throttle control 2232 assists in determining whether to accept the transfer. If the intermediate MLM 216 accepts the transfer, then the intermediate MLM fetches the file and publishes the file at step 2240. The intermediate MLM 216 then determines whether the reception was okay at step 2242. If the reception was okay, then the intermediate MLM 216 sends an acknowledgement at step 2244. The applications server then un-publishes the data and marks the data as transferred at step 2246.

If the intermediate MLM 216 rejects the transfer at step 2250, then the intermediate MLM 216 so informs the applications MLM 218, which spools the transfer request at step 2252. Additionally, if the reception of the data transfer was not okay as determined by step 2242, then the intermediate MLM 216 so informs the applications MLM 218 at rejects step 2256. The applications MLM 218 then spools the transfer request at step 2242.

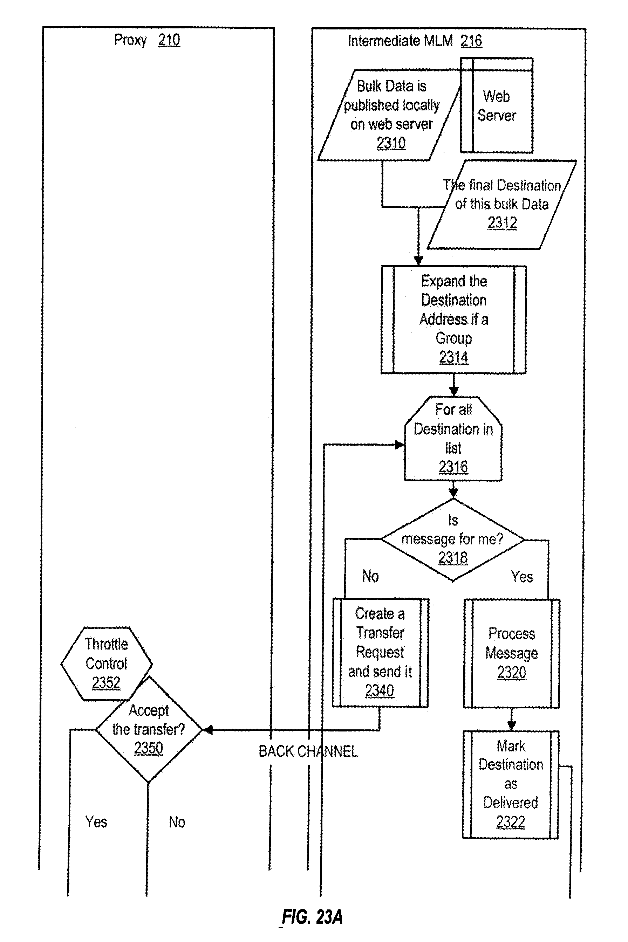

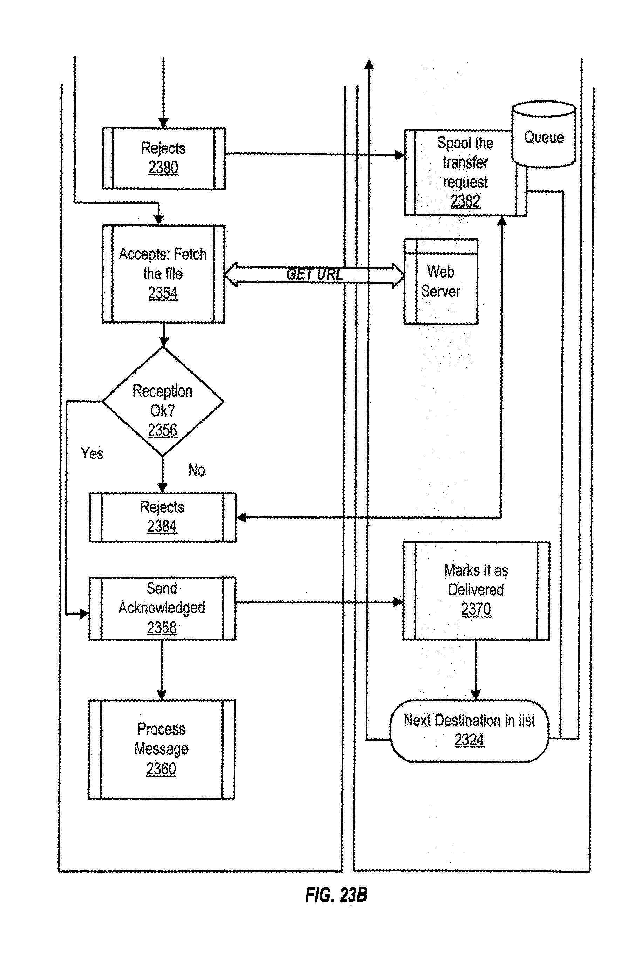

Figures 23A and 23B show the fetch in more detail. More specifically, the bulk data is published locally on the web server at step 2310. The final destination of the bulk data is determined at step 2312. If the destination address is a group, then the destination is expanded at step 2314. Next, the intermediate MLM 216 processes the data for all destinations that were expanded at step 2316. The intermediate MLM 216 determines whether the message is intended for the intermediate MLM 216 at step 2318. If so, then the message is processed at step 2320, the destination is marked as delivered at step 2322 and the loop proceeds to the next destination on the list at step 2324.

If the destination of the message is not the intermediate MLM 216, then the intermediate MLM 216 creates a transfer request and sends the request to the proxy 210 at step 2340. The proxy 210 then determines whether to accept the transfer at step 2350 using throttle control 2352. If the proxy 210 accepts the transfer then the proxy 210 fetches the file at step 2354 and determines whether the reception was okay at step 2356. If the reception was okay then the proxy 210 sends an acknowledgement to the intermediate MLM 216 at step 2358 and processes the message at step 2360. When the intermediate MLM 216 receives the acknowledgement then the intermediate MLM 216 marks the message as delivered at step 2370 and proceeds to the next destination on the list step 2324.

If the proxy 210 rejects the transfer at step 2380, then the proxy 210 so informs the intermediate MLM 216, which spools the transfer request at step 2382. Additionally, if the reception of the data transfer was not okay as determined by step 2356, then the proxy 210 so informs the intermediate MLM 216 at rejects step 2384. The intermediate MLM 216 then spools the transfer request at step 2382.

Regarding the throttle control, the remote services system 100 can limit network connections based on either static data or dynamically calculated parameters. Static data include, for example, time of day. Dynamically calculated parameters include, for example, total bytes sent, message sent, etc. For a customer MLM that is part of a customer MLM farm, these dynamic parameters are shared to reflect the total network usage. The throttle modules 2232, 2352 base their decision of whether to accept or reject a connection on this shared data and other local data such as disk space available.

### Other Embodiments

Other embodiments are within the following claims.

In view of the foregoing description of particular embodiments of the invention it will be appreciated by a person skilled in the art that various additions, modifications and alternatives thereto may be envisaged.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during the prosecution of this application or of any such further application derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A method of communicating in a remote services system comprising:
assigning a component within the remote services system with a unique remote services identifier;
communicating a forward channel communication using a forward channel communication path;
communicating a back-channel communication using a back-channel communication path; and,
determining a destination of the back-channel communication based upon the unique remote services identifier of the component.

2. The method of claim 1 wherein
the communicating is via a message.

3. The method of claim 2 wherein the message includes a header section and a content section.

4. The method of claim 3 wherein the header section includes information regarding at least one of a source of the message, a destination of the message, routing statistics of the message and a message type of the message.

5. The method of claim 3 or 4 wherein the content section includes actual information being communicated.

6. The method of claim 5 wherein the content section of the message includes at least one of an alarm, an event, a message response, a bulk data request, a bulk data response and data.

7. A method of communicating in a remote services system comprising:
communicating a forward channel communication using a forward channel communication path; and
communicating a back-channel communication using a back-channel communication path, the back-channel communication path being established only after a forward channel communication path is established.

8. The method of claim 7 wherein
the communicating is via a message.

9. The method of claim 8 wherein the message includes a header section and a content section.

10. The method of claim 9 wherein the header section includes information regarding at least one of a source of the message, a destination of the message, routing statistics of the message and a message type of the message.

11. The method of claim 9 or 10 wherein the content section includes actual information being communicated.

12. The method of claim 11 wherein the content section of the message includes at least one of an alarm, an event, a message response, a bulk data request, a bulk data response and data.

13. A method of communicating in a remote services system comprising:
assigning a component within the remote services system with a unique remote services identifier;
communicating a forward channel communication using a forward channel communication path;
communicating a back-channel communication using a back-channel communication path, the back-channel communication path being established only after a forward channel communication path is established; and,
determining a destination of the back-channel communication based upon the unique remote services identifier of the component.

14. The method of claim 13 wherein
the communicating is via a message.

15. The method of claim 14 wherein the message includes a header section and a content section.

16. The method of claim 15 wherein the header section includes information regarding at least one of a source of the message, a destination of the message, routing statistics of the message and a message type of the message.

17. The method of claim 15 or 16 wherein the content section includes actual information being communicated.

18. The method of claim 17 wherein the content section of the message includes at least one of an alarm, an event, a message response, a bulk data request, a bulk data response and data

19. A computer program comprising machine and/or computer readable program elements for configuring a computer system to implement the method according to any one of claims 1 to 18.

20. A computer program product comprising a machine and/or computer readable medium embodying a computer program according to claim 19.

21. A computer system configured to implement a method according to any one of claims 1 to 18.
